(19) Europäisches Patentamt
European Patent Office
Office européen des brevets

(11) Veröffentlichungsnummer: **0 132 825**
**A1**

# (12) EUROPÄISCHE PATENTANMELDUNG

(21) Anmeldenummer: 84108698.6

(22) Anmeldetag: 23.07.84

(51) Int. Cl.⁴: **B 23 B 29/03**

(30) Priorität: 23.07.83 DE 3326567

(43) Veröffentlichungstag der Anmeldung: 13.02.85 Patentblatt 85/7

(84) Benannte Vertragsstaaten: AT BE CH FR GB IT LI NL SE

(71) Anmelder: Kastner, Hermann, Dipl.-Ing.
Osterholzallee 89
D-7140 Ludwigsburg(DE)

(72) Erfinder: Kastner, Hermann, Dipl.-Ing.
Osterholzallee 89
D-7140 Ludwigsburg(DE)

(54) **Teilbares Werkzeug für die spanabhebende Bearbeitung.**

(57) Das Werkzeug (20) ist in einen Werkzeughalter (21) für die Befestigung an einer Werkzeugmaschine und in einen Werkzeugkopf (22) mit der Werkzeugschneide (23) unterteilt. Die beiden Werkzeugteile (21, 22) können an einer Trennstelle (24) von-einander getrennt werden. Sie werden mittels einer Kupplungsvorrichtung (25) miteinander verbunden. Diese weist zwei Gruppen von Führungs- und Anlageflächen (26, 27; 28, 29) auf, die teils am Werkzeughalter (21) und teils am Werkzeugkopf (22) angeordnet sind. Die eine Gruppe sind Kegelstumpfflächen (26, 27) und die andere Gruppe sind tangential wirkende Kupplungsflächen (28, 29), insbesondere mit Kerbzahnprofil. Die Kupplungsvorrichtung (25) weist außerdem eine Spannvorrichtung (31) mit einem Spannbolzen (37) und mit einer Spannzange (38) auf. Ersterer sitzt fest am Werkzeugkopf (22). Letztere ist im Werkzeughalter (21) mittels eines Kraftantriebes axial verschiebbar. Der Spannbolzen (37) und die Spannzange (38) werden mittels Kupplungsflächen in Form von Kegelstumpfflächen (51, 52) oder von Gewindeflanken eines Bolzengewindes (126) und eines Muttergewindes (130) miteinander gekoppelt.

Fig. 1
20
21
28, 29
26, 27
70
69
59
37
38
55
60
22
77
23
39
24
25
63
65
31
67
64
66
32
68

EP 0 132 825 A1

Croydon Printing Company Ltd

DIPL.-ING. HERMANN KASTNER
PATENTANWALT

7140 LUDWIGSBURG 22.7.1984
OSTERHOLZALLEE 84
RUF 0714[illegible]

0132825

eigenes Zeichen :
K 1. 12. EU 13

# Teilbares Werkzeug für die spanabhebende Bearbeitung

Bei Werkzeugmaschinen für die spanabhebende Bearbeitung von Werkstücken, bei denen die Werkzeuge gewisse Mindestabmessungen haben und in der Regel mit Hartmetallschneiden oder keramischen Schneiden bestückt sind, gibt es Bestrebungen, die Werkzeuge derart teilbar auszuführen, daß sie an einer bestimmten Trennstelle in einen die Schneide tragenden Werkzeugkopf und in einen der Befestigung des Werkzeugs an der Werkzeugmaschine dienenden Werkzeughalter getrennt werden können und daß diese beiden Werkzeugteile mit einer Kupplungsvorrichtung miteinander verbunden werden können. Dadurch können die hochbeanspruchten Schneiden leichter und schneller gegen neue Schneiden ausgewechselt werden oder auch bei Bedarf leichter und schneller die Schneidenform gewechselt werden, als das bei kompakten Werkzeugen möglich ist.

Bei diesen teilbaren Werkzeugen weist die Kupplungsvorrichtung aufeinander abgestimmte Führungs- und Anlageflächen teils am Werkzeugkopf und teils am Werkzeughalter auf. Dazu gehört außerdem eine Spannvorrichtung, die eine relativ zum Werkzeughalter verschiebbare Zugstange aufweist, die mit einem Kraftantrieb verbunden ist und die mit dem Werkzeugkopf gekoppelt werden kann, um diesen gegen den Werkzeughalter zu spannen.

Bei einer bekannten Ausführung eines teilbaren Drehmeißels sind an der Trennstelle zwischen Werkzeugschaft und Werkzeugkopf prismatische Führungsflächen oder Anlageflächen vorhanden. Die Zugstange weist einen zylindrischen Zugkopf auf, der einen schlüssellochförmigen Grundriß hat und der am Werkzeugkopf in eine Ausnehmung eingreift, die ebenfalls einen schlüssellochförmigen Grundriß hat, wobei sie an der Schmalseite offen ist. Bei dieser Ausführungsform kann der Werkzeugkopf stets nur in einer ganz bestimmten Stellung mit dem Werkzeugschaft verbunden werden. Das Verbinden und Trennen des Werkzeugkopfes und des Werkzeugschaftes erfolgt auf einer Bewegungsbahn, die rechtwinklig zur Längsachse des Werkzeugschaftes ausgerichtet ist. Das schränkt die Einsatzmöglichkeiten eines solchen Werkzeuges ein, insbesondere dann, wenn im Zuge der Bearbeitung eines Werkstückes die Hauptschnittkräfte nach Größe und Richtung sich ändern.

Bei einem anderen bekannten teilbaren Werkzeug sind an der Trennstelle teils ebene und teils zylindrische Führungs- und Anlageflächen vorhanden. Sie bilden am Werkzeugkopf einen kreisringzylinderförmigen Kragen und am Werkzeughalter einen in diesen Kragen hineinpassenden abgesetzten zylindrischen Zapfen. Sie dienen der Aufnahme der axialen und radialen Kräfte. Für die Übertragung tangentialer Kräfte ist im Bereich der ebenen Stirnfläche eine diametral ausgerichtete Nut-und-Federverbindung vorhanden. Die Kupplungsvorrichtung weist außerdem einige Klemmbolzen auf die im Zapfen des Werkzeughalters in je einer radial auswärts und zugleich schräg rückwärts gerichteten Bohrung längsverschiebbar geführt sind und die mittels eines Rundkeils am Ende der Zugstange nach außen getrieben werden können, so daß sie sich an einer im Inneren des Kragens vorhandenen Konusfläche des Werkzeugkopfes anlegen können. Durch die schräge Führung der Klemmbolzen wird der Werkzeugkopf teils axial und teils radial verspannt. Die radialen Spannkräfte wirken der gegenseitigen Anlage der Zylinderflächen zwischen dem Kragen am Werkzeugkopf und dem Zapfen am Werkzeughalter entgegen, weshalb der Kragen nicht beliebig dünnwandig ausgeführt werden darf. Dadurch wiederum ist der radiale Abstand der Klemmflächen an den Klemmbolzen von der Längsachse des Werkzeuges verhältnismäßig klein, so daß durch diese Kupplungsvorrichtung nur verhältnismäßig geringe Kippkräfte aufgenommen werden können.

Bei einer anderen bekannten Ausführungsform eines teilbaren Werkzeuges werden an der Trennstelle die Führungs- und Anlageflächen durch eine Plan-Kerbverzahnung (Hirth-Verzahnung) gebildet. Die Kupplungsvorrichtung weist einen mit dem Werkzeugkopf verbundenen Spannbolzen mit kegelstumpfförmigen Kupplungsflächen auf. Im Inneren des Werkzeughalters ist eine Spannzange vorhanden, deren einzelne Spannbacken teils an kegeligen und teils an zylindrischen Führungsflächen geführt sind und auf der Innenseite mit entsprechenden Gegenflächen zu den Konusflächen am Spannbolzen versehen sind. Bei einer durch die Zugstange ausgelösten Schließbewegung der Spannzange werden über den von ihr erfaßten Spannbolzen die beiden Plan-Kerbverzahnungen in axialer Richtung gegeneinander verspannt und zugleich der Spannbolzen in radialer Richtung eingeklemmt. Die Plan-Kerbverzahnungen liefern zugleich eine axiale, eine radiale und eine tangentiale Kraftübertragung vom Werkzeugkopf auf den Werkzeughalter. Dadurch, daß die Zähne der Plan-Kerbverzahnungen radial ausgerichtet sind, können radiale Kräfte nur durch die mehr oder minder im rechten Winkel zur Kraftrichtung ausgerichteten Zähne aufgenommen werden. Dadurch, daß von den nicht parallel zur Kraftrichtung ausgerichteten Zähnen die Zahnflanken gegenüber der Planfläche geneigt sind, entsteht bei der Übertragung einer radialen Kraft oder Querkraft eine nicht unbeträchtliche axiale Kraftkomponente. Bei der Übertragung tangentialer Kräfte tritt ebenfalls eine beträchtliche Axialkomponente auf. Da die Werkzeugschneide am Werkzeugkopf in aller Regel außermittig angeordnet ist und sie dabei oft einen beträchtlichen Abstand von der Werkzeugachse hat, addieren sich die Axialkomponenten dieser Kräfte auf einer Seite zu beträchtlichen Werten. Die axiale Komponente drängt die Plan-Kerbverzahnungen auseinander. Diese axiale Kraftkomponente muß von der Spannvorrichtung zusätzlich aufgenommen werden.

Der Erfindung liegt die Aufgabe zugrunde, ein teilbares Werkzeug zu schaffen, das einerseits vielfältige Einsatzmöglichkeiten hat und das andererseits an der Trennstelle günstigere Kraftübertragungsverhältnisse als die bekannten teilbaren Werkzeuge hat.

Diese Aufgabe wird durch ein Werkzeug mit den im Anspruch 1 angegebenen Merkmalen gelöst.

Dadurch, daß der eine Teil der Führungs- und Anlageflächen als Kegelstumpfflächen ausgebildet ist, wird einerseits eine großflächige gegenseitige Anlage der beiden Werkzeugteile erreicht, durch die die radialen Kräfte und die auf die Trennstelle hin wirkenden axialen Kräfte sehr gut aufgenommen werden können. Das gilt um so mehr, als die Kegelstumpfflächen als einfache Rotationsflächen sehr genau hergestellt werden können und dabei auch Werkstoffe mit hoher Festigkeit, insbesondere mit hoher Oberflächenhärte, eingesetzt werden können, die etwa durch Schleifen fertig bearbeitet werden können. Dadurch, daß der andere Teil der Führungs- und Anlageflächen als achsparallele Kupplungsflächen ausgebildet ist, können andererseits die bei außermittiger Schneide oft sehr beträchtlichen tangentialen Kräfte rückwirkungsfrei für die erstgenannten Führungs- und Anlageflächen übertragen werden. Das bedeutet unter anderem, daß die kegelstumpfförmigen Führungs- und Anlageflächen in tangentialer Richtung keinerlei Reibungskräfte übertragen müssen, weshalb sie bezüglich ihrer Anordnung, ihrer Ausrichtung und ihrer Ausdehnung völlig frei nach den Erfordernissen der axialen und radialen Kraftübertragung gestaltet werden können. Die Übertragung der tangentialen Kräfte allein durch die zweiten Führungs- und Anlageflächen bedeutet auch, daß die Spannvorrichtung dadurch nicht belastet wird.

Durch eine Ausgestaltung des Werkzeuges nach Anspruch 2 wird erreicht, daß die Werkzeugköpfe, die öfters vom Werkzeughalter abgenommen und danach auf metallenen Magazinsitzen und dergleichen abgesetzt werden, mit dem gegen Verformungen und Beschädigungen weniger empfindlichen kompakteren Kegelteil versehen sind. Der an der Werkzeugmaschine am Werkzeughalter verbleibende Kegelteil ist schon wegen dieser Anordnungs- und Handhabungsweise weniger gefährdet. Durch eine Ausgestaltung des Werkzeuges nach Anspruch 3 benötigen die weit außen gelegenen Kegelstumpfflächen bei einem vorgegebenen Flächenmaß nur einen verhältnismäßig geringen Anteil des radialen Bereiches der Querschnittsfläche, so daß für die übrigen Teile noch ein verhältnismäßig großer Querschnittsbereich zur Verfügung steht. Außerdem wird durch diese Maßnahme das Gegenmoment verhältnismäßig groß, das die Axialkraft des Spannbolzens in Bezug auf die achsferne Auflagefläche auf der einen Kegelstumpfseite auszuüben vermag.

Mit einer Ausgestaltung des Werkzeuges nach Anspruch 4 wird ein besonders günstiges Verhältnis der Einspannung des Spannbolzens sowohl in axialer wie auch in radialer Richtung erreicht.

Durch eine Ausgestaltung des Werkzeuges nach Anspruch 5 wird erreicht, daß die kegelstumpfförmigen Führungs- und Anlageflächen zumindest annähernd tangential zur Einspannstelle des als einseitig eingespannter Träger betrachteten Spannbolzens ausgerichtet sind, so daß in soweit eine Kraftübersetzung durch ungünstige geometrische Verhältnisse vermieden wird.

Durch eine Ausgestaltung des Werkzeuges nach Anspruch 6 wird vor allem bei gleichmäßiger Verteilung der tangentialen Kupplungsflächen die Herstellung dieser Kupplungsflächen vereinfacht und verbilligt. Außerdem wird dadurch eine vielfältigere Zuordnung der beiden Werkzeugteile in ihrer gegenseitigen Winkeleinstellung ermöglicht. Durch eine Ausgestaltung des Werkzeuges nach Anspruch 7 oder Anspruch 8 wird eine weitere Verbilligung der Herstellung der tangentialen Kupplungsflächen erreicht, weil dafür herkömmliche Werkzeuge, Bearbeitungsmaschinen und Bearbeitungsverfahren eingesetzt werden können. Bei einer Ausgestaltung des Werkzeuges nach Anspruch 9 ist jeder der beiden Werkzeugteile mit tangentialen Kupplungsflächen versehen, die unmittelbar das Gegenstück zu den Kupplungsflächen des jeweils anderen Teils darstellen. Damit können diese Werkzeugteile unmittelbar miteinander gekuppelt werden. Bei einer Ausgestaltung des Werkzeugs nach Anspruch 10 werden beide Werkzeuteile mit der gleichen Art tangentialer Kupplungsflächen versehen, wozu unter Umständen sogar das gleiche Werkzeug verwendet werden kann. Dadurch, daß diese beiden Kupplungsprofile mittels einer Kupplungshülse mit entsprechendem Gegenprofil miteinander verbunden werden, d. h. miteinander gekoppelt werden, wird eine gewisse radiale Nachgiebigkeit der tangentialen Kupplung erreicht, so daß selbst beim Auftreten gewisser Fertigungstoleranzen bei den tangentialen Kupplungsflächen keinerlei Rückwirkungen auf die Führung der Werkzeugteile durch die kegelstumpfförmigen Führungs- und Anlageflächen zu befürchten sind. Bei der Verwendung je eines Nabenprofils an den beiden Werkzeugteilen und eines Wellenprofils an der Kupplungshülse kann die gesamte tangentiale Kupplung raumsparend in das Innere der Werkzeugteile hinein verlegt werden. Dadurch können zugleich die kegelstumpfförmigen Führungs- und Anlageflächen bis an die Außenseite der Werkzeugteile hin verlegt werden und damit im größtmöglichen Halbmesserbereich angeordnet werden. Bei einer Ausgestaltung des Werkzeug nach Anspruches 10 bleibt die Kupplungshülse stets an ihrem Einsatzort in dem einen Werkzeugteil, und zwar zweckmäßiger Weise am Werkzeughalter. Bei der letztgenannten Anordnung ist die Zahl der benötigten Kupplungshülsen nicht größer als die Zahl der Werkzeughalter. Mit einer Ausgestaltung des Werkzeuges nach Anspruch 12 wird eine einfache und leicht herzustellende Arretiervorrichtung geschaffen. Wenn sowohl in der Kupplungshülse wie in dem Werkzeugteil das Loch für den Arretierungsstift als Durchgangsloch ausgebildet ist, kann dieser im Bedarfsfalle in den Innenraum des betreffenden Werkzeugteils hineingestoßen werden, um so die Kupplungshülse aus dem Werkzeugteil herausnehmen zu können. Die Ausgestaltung des Werkzeuges nach Anspruch 11 läßt sich ebenfalls sehr einfach herstellen und handhaben. Sie kommt vor allem für die Ausführungsform mit außenliegender Kupplungshülse in Betracht. Dabei ist auch eine weitere Ausgestaltung nach Anspruch 14 möglich, bei der durch die Einschaltung einer Feder die Kupplungshülse axial nachgiebig geführt ist. Das bedeutet, daß beim Einsetzen eines neuen Werkzeugkopfes die Kupplungshülse entweder von Hand oder durch den Werkzeugkopf zunächst einmal zurückgeschoben werden kann, bis die kegelstumpfförmigen Führungs- und Anlageflächen aneinander anliegen und bis der Werkzeugkopf in Umfangsrichtung in die richtige Drehstellung gebracht ist. Ebenso leicht kann die einmal gewählte Drehstellung des Werkzeugkopfes nach geringfügigem Lösen der Spannvorrichtung dadurch leicht verändert werden, daß die Kupplungshülse entgegen der Antriebfeder ausreichend weit zurückgezogen wird und der Werkzeugkopf auf die gewünschte neue Drehstellung eingestellt wird, ehe die Kupplungshülse wieder freigegeben wird.

Durch eine Ausgestaltung des Werkzeuges nach Anspruch 15 wird eine Spannvorrichtung geschaffen, die in radialer Richtung einen verhältnismäßig geringen Raumbedarf hat, so daß sie ohne Beeinträchtigung ihrer radialen Klemmwirkung und ihrer axialen Zugkräfte auch in Werkzeughaltern mit verhältnismäßig geringen Außenabmessungen untergebracht werden kann. Außerdem fluchten bei dieser Spannvorrichtung die - neben den Kupplungsflächen zwischen der Spannzange und dem Spannbolzen - für eine genaue und gleichmäßig gute Einspannung des Spannbolzens wichtigen zylindrischen Führungsflächen auf der Außenseite der Spannzange und am Werkzeughalter miteinander, so daß sie in einer Einspannung des betreffenden Teils und vor allem in einem durchgehenden Bearbeitungsgang hergestellt werden können und dadurch die bestmögliche Übereinstimmung ihrer geometrischen Verhältnisse untereinander gewährleistet ist. Selbst beim Auftreten von Fertigungstoleranzen bezüglich der Durchmesser oder Halbmesser der zylindrischen Führungsflächen ist eine genaue achsparallele Ausrichtung der einzelnen Spannbacken der Spannzange gewährleistet.

Bei einer Ausgestaltung des Werkzeuges nach Anspruch 16 entfallen jegliche kegeligen Führungsflächen zwischen der Spannzange und dem Werkzeughalter. Ihre Führungsflächen sind gleiche durchgehende Zylinderflächen. Durch den Wegfall der kegeligen Führungsflächen und des entsprechenden radialen Bewegungsraumes der Spannbacken der Spannzange wird eine hinsichtlich der radialen Abmessungen noch kompaktere Spannvorrichtung geschaffen. Der eingesparte Bewegungsraum und die geringere radiale Bauhöhe zumindest einiger der Teile der Spannvorrichtung kann entweder für eine Verringerung der Außenabmessungen des Werkzeuges oder für eine radialeVerstärkung einiger der Teile der Spannvorrichtung oder auch für beides in entsprechender Aufteilung der Maßnahmen genutzt werden. Bei dieser Ausgestaltung entfällt wegen des Wegfalls der kegeligen Führungsflächen die erste axiale Bewegungsphase der Spannzangen entlang der kegeligen Führungsflächen. Wegen der ständig vorhandenen gegenseitigen Anlage der durchgehenden zylindrischen Führungsflächen entfällt auch ein großer Teil der zweiten axialen Bewegungsphase zur Herstellung eines ausreichend großen axialen Überdeckungsgrades, wie er bei einzelstehenden zylindrischen Führungsflächen erforderlich ist. Weil überdies die Spannbacken für das Einspannen des Spannbolzens im eigentlichen Sinne des Wortes nur einen verhältnismäßig kurzen axialen Weg benötigen, können die Kupplungsflächen zwischen dem Spannbolzen und der Spannzange in axialer Richtung verhältnismäßig dicht aneinander gerückt werden, so daß im gleichen Längenabschnitt entweder mehr Kupplungsflächen untergebracht werden können und/oder der Abschnitt mit den Kupplungsflächen verhältnismäßig kurz ausgeführt werden kann. Dadurch und durch die Verringerung des axialen Bewegungsraumes der Spannzange wird eine auch in axialer Richtung sehr kompakte Spannvorrichtung geschaffen. Bei einer Ausgestaltung des Werkzeuges nach Anspruch 17 werden die gleichen Vorteile wie zuvor erreicht. Der größere Drehweg wird mindestens zum Teil durch die Vergrößerung des Anteils der einander überdeckenden Flächen bei den Kupplungsflächen wieder ausgeglichen, wodurch eine weitere axiale Verkürzung der Spannvorrichtung möglich ist. Mit einer Weiterbildung des Werkzeuges nach Anspruch 18 werden wieder die Vorteile der Schnellkupplung mit dem kürzeren Drehweg erreicht, wobei die Verringerung des Überdeckungsgrades durch eine entsprechende Vergrößerung der Anzahl der Gewindegänge ausgeglichen werden kann.

Bei einer Ausgestaltung des Werkzeuges nach Anspruch 19 wird erreicht, daß die radiale Komponente der Einspannkräfte zwischen dem Spannbolzen und der Spannzange unmittelbar an die zylindrische Führungsfläche am Werkzeughalter übertragen wird.

Mit einer fallweisen Ausgestaltung des Werkzeuges nach Anspruch 20 oder nach Anspruch 21 wird eine besonders wirksame Einspannung des Spannbolzens erreicht.

Bei einer Ausgestaltung des Werkzeuges nach Anspruch 22 wird das Einkuppeln der Kupplungsflächen des Spannbolzens und der Spannzange in Umfangsrichtung erleichtert, weil dabei in axialer Richtung selbsttätig eine Relativstellung der beiden Teile erreicht wird, in der in Umfangsrichtung ihre Kupplungsflächen "Zahn auf Lücke" stehen. Mit einer Weiterbildung nach Anspruch 23 läßt sich das auf einfache Weise mechanisch verwirklichen.

Durch eine Ausgestaltung des Werkzeugs nach Anspruch 24 wird eine einfach herzustellende Drehvorrichtung für die Ausführungsformen geschaffen, die eine Drehbewegung für den Kuppelvorgang erfordern.

Durch eine Ausgestaltung des Werkzeugs nach Anspruch 25 wird eine genau zentrierende und zugleich sehr steife Verbindung zwischen dem Spannbolzen und dem Werkzeugkopf geschaffen. Diese wird durch eine Weiterbildung nach Anspruch 26 noch dadurch unterstützt, daß der Spannbolzen und der Werkzeugkopf an einer in axialer Richtung von ihren kegelstumpfförmigen Führungs- und Anlageflächen entfernten Stelle nochmals in radialer Richtung genau geführt werden. Diese Vorteile kommen bei einer Weiterbildung nach Anspruch 27 dadurch noch stärker zur Geltung, daß das Sägezahngewinde in der hier gewählten Zugrichtung keinerlei radial ausgerichtete Kräfte erzeugt.

../11

Im folgenden wird die Erfindung anhand einiger in den Zeichnungen dargestellter Ausführungsbeispiele näher erläutert. Es zeigen:

Fig. 1 teils eine Seitenansicht und teils einen Längsschnitt eines ersten Ausführungsbeispieles des Werkzeuges gemäß der Erfindung in der Spannstellung oder Betriebsstellung;

Fig. 2 die Seitenansicht bzw. der Längsschnitt des Werkzeuges nach Fig. 1 in der Lösestellung;

Fig. 3 einen vergrößert dargestellten Ausschnitt des Werkzeuges nach Fig. 1;

Fig. 4 einen ausschnittweise dargestellten Querschnitt des Werkzeuges nach Fig. 1;

Fig. 5 einen ausschnittweise dargestellten Querschnitt eines abgewandelten Ausführungsbeispieles des Werkzeuges;

Fig. 6 einen ausschnittweise dargestellten Längsschnitt eines weiteren Ausführungsbeispiels des Werkzeugs;

Fig. 7 einen ausschnittweise dargestellten Längsschnitt eines weiteren Ausführungsbeispieles des Werkzeuges;

Fig. 8 und 9 je eine teilweise geschnitten dargestellte Seitenansicht eines weiteren Ausführungsbeispieles des Werkzeugs in der Spannstellung bzw. in der Lösestellung;

Fig. 10 teils eine Seitenansicht und teils einen Längsschnitt

Fig. 11 einen Querschnitt des Werkzeuges nach Fig. 10;

Fig. 12 und 13 je einen Querschnitt einer teilweisen Abwandlung des Werkzeuges nach Fig. 10;

Fig. 14 einen vergrößert dargestellten Ausschnitt aus dem Längsschnitt nach Fig. 10;

Fig. 15 eine ausschnittweise dargestellte Abwicklung des Ausschnittes nach Fig. 14;

Fig. 16 eine Stirnansicht eines Teils des Werkzeuges nach Fig. 14;

Fig. 17 teils eine Seitenansicht und teils einen Längsschnitt eines weiteren Ausführungsbeispieles des Werkzeuges;

Fig. 18 eine schematische Stirnansicht cer Teile des Werkzeuges nach Fig. 17.

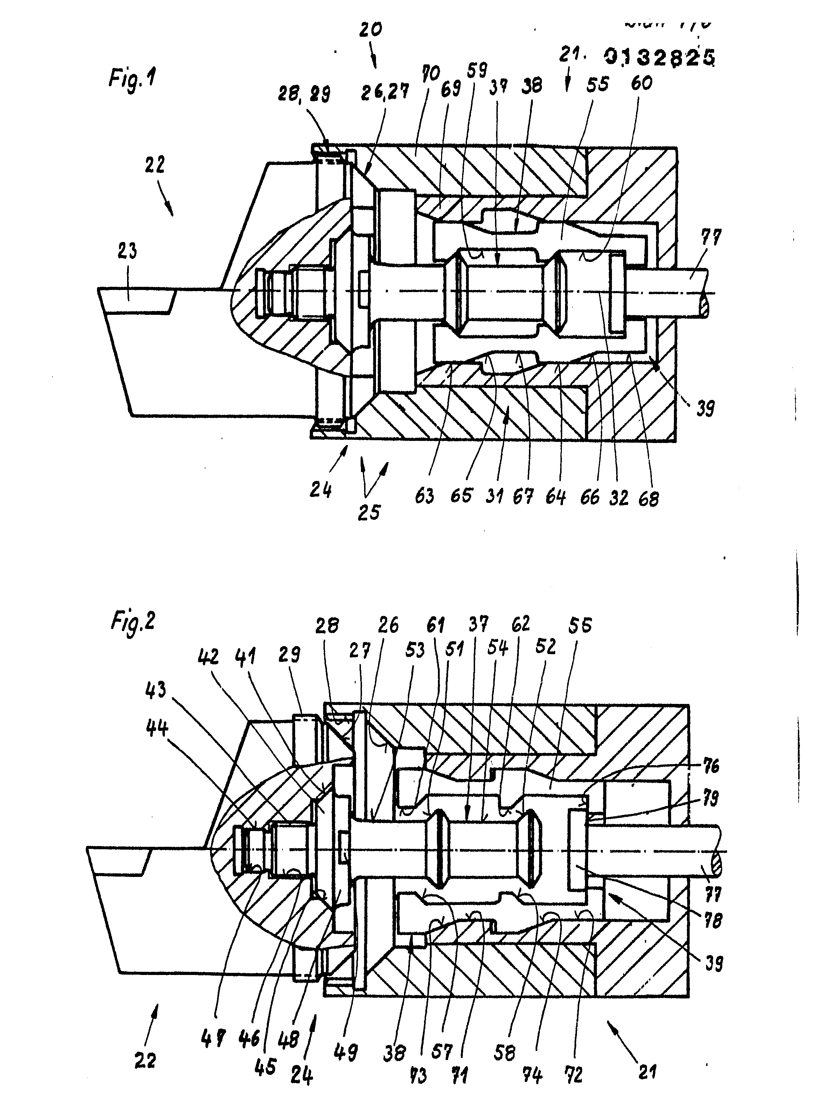

Das aus Fig. 1 und 2 ersichtliche Werkzeug 20 wird als Drehmeißel oder als Bohrmeißel eingesetzt. Es weist zwei Hauptbauteile auf, nämlich einen Werkzeughalter 21 und einen Werkzeugkopf 22. Der Werkzeughalter 21 dient der Befestigung des Werkzeuges 10 an einer nicht dargestellten Werkzeugmaschine. Die von der Art und vom Aufbau der Werkzeugmaschine abhängigen Gestaltungsmerkmale des Werkzeughalters und Verbindungselemente sind ebenfalls nicht dargestellt. Der Werkzeugkopf 22 trägt den Schneidenkörper, der im folgenden kurz als Schneide 23 bezeichnet ist und der hier als aufgelötete Hartmetall-Schneide ausgebildet und dargestellt ist.

Das Werkzeug 20 ist teilbar. Der Werkzeughalter 21 und der Werkzeugkopf 22 können an einer Trennstelle 24 voneinander getrennt werden. Im gespannten Zustand, dem Betriebszustand (Fig. 1), werden die beiden Werkzeugteile mittels einer Kupplungsvorrichtung 25 miteinander verbunden.

Die Kupplungsvorrichtung 25 weist zwei Gruppen Führungs- und Anlageflächen auf, nämlich die ersten Anlageflächen 26 bzw. 27 und die zweiten Anlageflächen 28 bzw. 29 (Fig. 2), die teils am Werkzeughalter 21 und teils am Werkzeugkopf 22 angeordnet sind. Daneben weist die Kupplungsvorrichtung 25 eine Spannvorrichtung 31 auf. Sowohl die Führungs- und Anlageflächen 26 ... 28 wie auch die Spannvorrichtung 31 und ihre Teile sind mittig zu einer gemeinsamen Achse 32 des Werkzeughalters 21 und des Werkzeugkopfes 22 angeordnet.

Die erstgenannten Führungs- und Anlageflächen 26 und 27 sind aufeinander abgestimmte Kegelstumpfflächen, die im Bereich der einander zugekehrten Stirnseiten der beiden Werkzeugteile angeordnet sind und zumindest annähernd im gleichen Halbmesserbereich gelegen sind. Die am Werkzeughalter 21 vorhandene Kegelstumpffläche 26 ist als Innenkonus ausgebildet. Die am Werkzeugkopf 22 vorhandene Kegelstumpffläche 28 ist als Außenkonus ausgebildet. Die beiden Kegelstumpfflächen 26 und 27 haben einen Kegelspitzenwinkel, der zwischen 60° und 120° liegt. Die Größe dieses Winkelwertes richtet sich unter anderem danach, in welchem Verhältnis zueinander die zu übertragenden Radialkräfte und Axialkräfte auftreten. Beim Überwiegen der Radialkräfte ist ein kleinerer Kegelspitzenwinkel günstiger. Umgekehrt ist beim Überwiegen der Axialkräfte ein größerer Kegelspitzenwinkel günstiger. Die Kegelstumpfflächen 26 und 27 sind an beiden Werkzeugteilen 21 und 22 in einem möglichst weit außen gelegenen Halbmesserbereich angeordnet, damit der Abstand zur gemeinsamen Achse 32 möglichst groß ist und ein möglichst großer Momentenarm entsteht. Die radiale Abmessung der Kegelstumpfflächen 26 und 27 richtet sich nach der Größe der zu übertragenden Kräfte und der zulässigen Flächenpressung, wobei die unvermeidlichen elastischen Verformungen zu berücksichtigen sind. Im Rahmen dieser Erfordernisse werden die Kegelstumpfflächen 26 und 27 auf einen möglichst kleinen Halbmesserbereich begrenzt, damit bei vorgegebenen Außenabmessungen der beiden Werkzeugteile für die übrigen Einzelteile, insbesondere die Teile der Spannvorrichtung 31, ein möglichst großer Raum zur Verfügung steht.

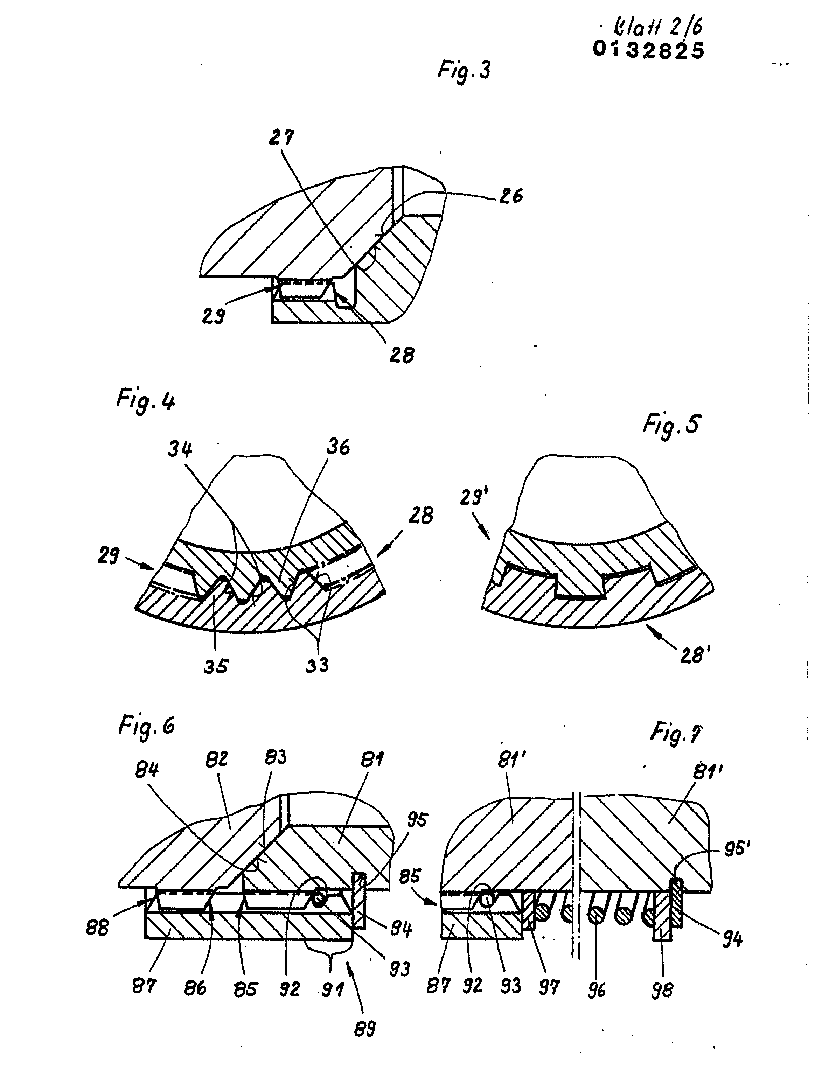

Die zweiten Führungs- und Anlageflächen 28 und 29 wirken als tangentiale Kupplungsflächen. Diese tangentialen Kupplungsflächen 28 und 29 werden durch die beidseitigen ebenen Zahnflanken 33 bzw. 34 der Zähne 35 und 36 einer regelmäßigen Kerbverzahnung (Fig. 4) gebildet. Die am Werkzeughalter 21 angeordneten und nach innen gerichteten Zähne 35 mit den Zahnflanken 33 bilden zusammen das Nabenprofil und die am Werkzeugkopf angeordneten und nach außen gerichteten Zähne 36 mit den Zahnflanken 34 bilden zusammen das Wellenprofil der Kerbverzahnung.

Anstelle einer regelmäßigen Kerbverzahnung können als tangentiale Kupplungsflächen 28' und 29' auch die Flanken eines regelmäßigen Vielnutprofils eingesetzt werden, wie das in Fig. 5 angedeutet ist.

Die Spannvorrichtung 31 weist einen Spannbolzen 37, eine Spannzange 38 und eine die Spannzange 38 betätigende Zugvorrichtung 39 auf.

Der Spannbolzen 37 ist mit dem Werkzeugkopf 22 abnehmbar verbunden, wobei er außerdem daran genau mittig geführt ist. Der Spannbolzen 37 weist zu diesem Zweck (Fig. 2) eine kegelstumpfförmige Führungs- und Anlagefläche 41 (als Außenkonus) auf, die an der Umfangsfläche eines Bundes 42 angeordnet ist, der in einem gewissen axialen Abstand vom Ende des Spannbolzens 37 vorhanden ist. In Richtung zum Ende des Spannbolzens 37 hin schließt an den Bund 42 ein zylindrischer Abschnitt mit einem Schraubengewinde 43 an. Dieses Schraubengewinde 43 ist als Sägezahngewinde ausgebildet, dessen annähernd rechtwinklig zur gemeinsamen Achse 32 ausgerichtete Gewindeflanke vom Werkzeugkopf 22 abgekehrt ist. An diesen Abschnitt mit dem Schraubengewinde 43 schließt ein letzter Abschnitt mit einer zylindrischen Führungsfläche 44 an. In entsprechender Weise sind am Werkzeugkopf 22 eine kegelstumpfförmige Führungs- und Anlagefläche 45 (als Innenkonus), daran anschließend ein Abschnitt mit einem Muttergewinde 46 und ein letzter Abschnitt mit einer glatten zylindrischen Führungsfläche 47 vorhanden, die auf die entsprechenden Gegenflächen am Spannbolzen 37 abgestimmt sind. Auf der vom Gewinde 43 abgekehrten Seite des Bundes 42 mit der Kegelstumpffläche 41 ist ein zylindrischer Bund 48 vorhanden, der mit zwei oder mehr Anflachungen 49 versehen ist, damit der Spannbolzen 37 am Werkzeugkopf 22 festgezogen werden kann.

Der Spannbolzen 37 weist in einiger Entfernung von der Befestigungsstelle mit dem Werkzeugkopf 22 zwei Kupplungsflächen 51 und 52 auf. Diese Kupplungsflächen 51 und 52 sind als Kegelstumpfflächen ausgebildet. Sie haben untereinander den gleichen Innendurchmesser und den gleichen Außendurchmesser. Ihr Kegelspitzenwinkel liegt zwischen 45° und 90° und beträgt bevorzugt 60°. Die Flächennormale dieser Kupplungsflächen 51 und 52 hat eine radial auswärts gerichtete Komponente und eine zum Werkzeugkopf 22 hin gerichtete axiale Komponente, wobei die Flächennormale beider Kupplungsflächen 51 und 52 untereinander parallel ausgerichtet sind. Wenn bei solchen umlaufenden Flächen Angaben über die Ausrichtung ihrer Flächennormale gemacht werden und dabei auf die Ausrichtung der Flächennormale einer anderen Fläche oder auf die Anordnung bestimmter Teile Bezug genommen wird, ist stets davon auszugehen, daß diese Angaben auf jeweils dieselbe Schnittebene, insbesondere dieselbe Längsschnittebene, bezogen sind, die im allgemeinen mit der Zeichenebene der Darstellung gleichzusetzen ist.

Die beiden Kupplungsflächen 51 und 52 am Spannbolzen 37 haben untereinander einen bestimmten axialen Abstand. An den kleineren Durchmesser der Kupplungsflächen 51 und 52 schließt je eine zylindrische Übergangsfläche 53 bzw. 54 an. Die Übergangsfläche 53 erstreckt sich von der Kupplungsfläche 51 aus bis in die Nähe der Befestigungsstelle mit dem Werkzeugkopf 22 hin. Die Übergangsfläche 54 erstreckt sich von der Kupplungsfläche 52 aus bis zur Rückseite der Kupplungsfläche 51 hin. Die Rückseite beider Kupplungsflächen ist im allgemeinen ebenfalls eine Kegelstumpffläche, die jedoch einen erheblich stumpferen Kegelspitzenwinkel als die Kupplungsfläche  hat.

Die im Werkzeughalter 21 angeordnete Spannzange 38 wird durch mehrere Längsschlitze in voneinander getrennte Spannbacken 55 unterteilt. Diese werden mittels gummielastischer Federelemente zusammengehalten, die in den Schlitzen angeordnet sind (Fig. 11 und 12) und mit den einzelnen Spannbacken verbunden sind, insbesondere daran angegossen oder anvulkanisiert sind, oder die damit verklebt sind. Wenn in Bezug auf die Spannzange 38 Angaben über einzelne Gestaltungsmerkmale, insbesondere über die Anordnung, Ausrichtung oder Abmessung eines ihrer Einzelmerkmale gemacht werden, gilt das auch in Bezug auf die einzelnen Spannbacken mit der Maßgabe, daß diese die gleiche gegenseitige Zuordnung haben wie vor der Zerteilung des Spannzangenkörpers.

Die Spannzange 38 ist in erster Näherung ein hohlzylindrisches Gebilde. Sie ist auf ihrer Innenseite mit zwei Kupplungsflächen 57 und 58 versehen, die als Kegelstumpfflächen ausgebildet sind. Deren Flächennormale hat die umgekehrte Ausrichtung wie die Flächennormale der Kupplungsflächen 51 und 52 am Spannbolzen 37. Die Kupplungsflächen 57 und 58 haben untereinander den gleichen Innenhalbmesser und den gleichen Außenhalbmesser, die geringfügig größer als die entsprechenden Maße der Kupplungsflächen 51 und 52 am Spannbolzen 37 sind. Diese Kupplungsflächen 57 und 58 haben den gleichen axialen Abstand untereinander, den die Kupplungsflächen 51 und 52 am Spannbolzen 37 haben. Sie sind außerdem an der Spannzange 38 so angeordnet, daß sie in deren Spannstellung (Fig. 1) zum größten Teil in den gleichen axialen Abschnitten wie die Kupplungsflächen 51 und 52 am Spannbolzen stehen und an diesen anliegen.

An den Außenhalbmesser der Kupplungsflächen 57 und 58 schließt in der vom Werkzeugkopf 21 abgekehrten Richtung je eine zylindrische Übergangsfläche 59 bzw. 60 an, deren axiale Erstreckung etwas größer ist als der größte axiale Verstellweg der Spannzange 38 zwischen ihrer Spannstellung (Fig. 1) und ihrer Lösestellung (Fig. 2). Vom Innenhalbmesser der Kupplungsflächen 57 und 58 geht in der umgekehrten axialen Richtung je eine ebenfalls zylindrische Übergangsfläche 61 bzw. 62 aus. Die Übergangsfläche 61 erstreckt sich bis zum Ende der Spannzange 38. Die Übergangsfläche 62 erstreckt sich bis zu der Querschnittsebene, an der die weiter außen gelegene Übergangsfläche 59 endet, so daß dort zwischen ihnen eine mehr oder ebene kreisringförmige Übergangsfläche entsteht.

Die Spannzange 38 weist auf ihrer Außenseite zwei zylindrische Führungsflächen 63 und 64 und zwei kegelstumpfförmige Führungsflächen 65 und 66 auf (Fig. 1). Die zylindrischen Führungsflächen 63 und 64 haben untereinander den gleichen Außenhalbmesser. Je eine der kegelstumpfförmigen Führungsflächen 65 und 66 schließt an der vom Werkzeugkopf 22 abgekehrten Seite an eine der zylindrischen Führungsflächen 63 bzw. 64 an, wobei sie sich von dort aus verjüngt. Die Flächennormale der kegelstumpfförmigen Führungsflächen 65 und 66 haben demnach eine radial auswärts gerichtete Komponente und eine vom Werkzeugkopf 22 weg gerichtete axiale Komponente. Die Flächennormale beider kegelstumpfförmiger Führungsflächen 65 und 66 sind untereinander parallel ausgerichtet. Die Halbmesserdifferenz ist bei beiden kegelstumpfförmigen Führungsflächen zumindest annähernd gleich groß und dabei zugleich größer als die Halbmesserdifferenz der Kupplungsflächen 51 und 52 am Spannbolzen 37. Am kleineren Halbmesser der kegelstumpfförmigen Führungsflächen 65 und 66 schließt je eine zylindrische Übergangsfläche 67 bzw. 68 an. Die Übergangsfläche 67 erstreckt sich bis zum Anfang der benachbarten zylindrischen Führungsfläche 64. Die Übergangsfläche 68 erstreckt sich bis zum Ende der Spannzange 38 hin.

Für jede der äußeren Führungsflächen 63 ... 66 an der Spannzange 38 ist, als Teil der Spannvorrichtung 31, am Werkzeughalter 21 je eine darauf abgestimmte innere Führungsfläche vorhanden. Diese sind an einem hülsenförmigen Führungsteil 69 des Werkzeughalters 21 angeordnet, der in nicht dargestellter Weise mit dem rohrförmig erscheinenden Hauptteil 70 des Werkzeughalters 21 verbunden ist, an dessen vorderem Ende sich die kegelstumpfförmige Führungs- und Anlagefläche 26 befindet.

Diese inneren Führungsflächen sind zwei zylindrische Führungsflächen 71 und 72 und zwei kegelstumpfförmige Führungsflächen 73 und 74. Die zylindrischen Führungsflächen 71 und 72 haben untereinander den gleichen Innendurchmesser, der zumindest annähernd gleich dem doppelten Außenhalbmesser der äußeren zylindrischen Führungsflächen 63 und 64 an der Spannzange 38 ist. Von den kegelstumpfförmigen Führungsflächen 73 und 74 schließt je eine an der dem Werkzeugkopf 22 zugekehrten Seite an je eine der zylindrischen Führungsflächen 71 und 72 an, von wo aus sie sich erweitern. Ihre Flächennormale die untereinander parallel ausgerichtet sind, haben zumindest annähernd die entgegengesetzte Ausrichtung wie die Flächennormale der äußeren kegelstumpfförmigen Führungsflächen 65 und 66 an der Spannzange 38. Die inneren kegelstumpfförmigen Führungsflächen 73 und 74 am Führungsteil 69 haben eine Halbmesserdifferenz, die größer ist als die Halbmesserdifferenz der Kupplungsflächen 51 und 52 am Spannbolzen 37. Der kleinere Halbmesser der kegelstumpfförmigen Führungsflächen 73 und 74 ist ungefähr gleich groß wie der größere Halbmesser der kegelstumpfförmigen äußeren Führungsflächen 65 und 66 an der Spannzange 38.

An die kegelstumpfförmige Führungsfläche 74 schließt eine zylindrische Übergangsfläche 55 an, die sich in Richtung zum Werkzeugkopf 22 hin bis zu der Querschnittsebene erstreckt, an der die zylindrische Führungsfläche 71 beginnt.

An dem Führungsteil 69 haben die Übergangsstellen zwischen je einer der inneren zylindrischen Führungsflächen 71 und 72 und der ihr zugehörigen, an ihr anschließenden kegelstumpfförmigen Führungsfläche 73 bzw. 74 den gleichen axialen Abstand, den an der Spannzange die Übergangsstellen zwischen je einer der äußeren zylindrischen Führungsflächen 63 und 64 und der ihr zugehörigen, an sie anschließenden kegelstumpfförmigen Führungsflächen 65 bzw. 66 haben. Dadurch werden bei einer Axialbewegung der Spannzange 38 ihre Spannbacken 55 stets parallel zu sich selbst bewegt, sei es entlang der zylindrischen Führungsflächen oder sei es entlang der kegelstumpfförmigen Führungsflächen.

Die Spannzange 38 weist an dem vom Werkzeugkopf 22 abgekehrten Ende in ihrem Inneren eine kreisringförmige Anlagefläche 76 auf, die dem Werkzeugkopf 22 zugekehrt ist. Diese Anlagefläche 76 ist rechtwinklig zur gemeinsamen Achse 32 ausgerichtet. Diese Anlagefläche bildet einen Teil der Zugvorrichtung 39.

Als weiterer Teil der Zugvorrichtung ist eine Zugstange 77 vorhanden, die mit einem nicht dargestellten Kraftantrieb verbunden ist oder verbindbar ist. Die Zugstange 77 ist mittig zur gemeinsamen Achse 32 angeordnet. Sie erstreckt sich bis in den Innenraum der Spannzange 38 hinein. Die Zugstange 77 ist an ihrem in den Innenraum der Spannzange 38 hineinragenden Ende mit einem Zugkopf 78 versehen, der eine vom Werkzeugkopf 22 abgekehrte ebene kreisringförmige Anlagefläche 79 aufweist. Diese Anlagefläche 79 am Zugkopf 78 und die ihm zugekehrte Anlagefläche 76 an der Spannzange 38 liegen in jeder Stellung der Spannzange 38 zumindest teilweise im gleichen Halbmesserbereich.

Die bisher beschriebenen Teile des Werkzeuges 20 wirken wie folgt zusammen:

Zum Lösen des Werkzeugkopfes 22 vom Werkzeughalter 21 wird die Zugstange 77 bis in ihre vordere Stellung in den Werkzeughalter 21 hineingeschoben (Fig. 2). Bei ihrer Bewegung dorthin wird, durch nicht dargestellte Mitnehmer, die Spannzange 38 in ihre aus Fig. 2 ersichtliche Lösestellung oder Freigabestellung geschoben. Dabei

bewegen sich ihre Spannbacken zunächst mit ihren äußeren zylindrischen Führungsflächen 63 und 64 entlang der zylindrischen Führungsflächen 71 und 72 am Führungsteil 69. Dadurch entfernen sich die kegelstumpfförmigen Kupplungsflächen 57 und 58 der Spannzange von den Gegenflächen, den kegelstumpfförmigen Kupplungsflächen 51 und 52 am Spannbolzen 37, in axialer Richtung. Im zweiten Abschnitt der axialen Bewegung der Spannzange 38 bewegen sich ihre Spannbacken 55 mit ihren kegelstumpfförmigen äußeren Führungsflächen 65 und 66 entlang der inneren kegelstumpfförmigen Führungsflächen 73 und 74 des Führungsteils 69 so weit vorwärts und zugleich radial auswärts, bis die zylindrischen Übergangsflächen 67 und 68 der Spannzange 38 an den zylindrischen Führungsflächen 71 und 72 des Führungsteils 69 anliegen. In diesem zweiten Abschnitt der Axialbewegung der Spannzange 38 werden ihre Spannbacken 55 durch die Federelemente 56 so weit auseinandergespreizt, daß ihre auf ihrer Innenseite gelegenen kegelstumpfförmigen Kupplungsflächen 57 und 58 außerhalb der axialen Bewegungsbahn der kegelstumpfförmigen Kupplungsflächen 51 und 52 des Spannbolzens 37 liegen. Dadurch kann der Spannbolzen 37 aus der Spannzange 38 und aus dem gesamten Werkzeughalter 21 in axialer Richtung frei herausgezogen werden. Dabei lösen sich zunächst die beiden kegelstumpfförmigen Führungs- und Anlageflächen 26 und 27 voneinander. Nach einer gewissen Wegstrecke des Werkzeugkopfes 22 lösen sich auch die tangentialen Kupplungsflächen 28 und 29 voneinander. Sobald der Spannbolzen 37 ganz aus der Spannzange 38 ausgetreten ist, kann der Werkzeugkopf 22 vollständig wegbewegt werden.

Bei dem umgekehrten Bewegungsablauf zum Einspannen eines Werkzeugkopfes 22 wird dieser auf dem letzten Teil der Zuführbewegung möglichst mittig zur gemeinsamen Achse 32 in axialer Richtung auf den Werkzeughalter 21 zubewegt, so daß sein vorauslaufender Spannbolzen 37 in den Innenraum der Spannzange 38 eintritt. Eine kurze Wegstrecke vor Erreichen der axialen Endstellung des Werkzeugkopfes 22 tritt das durch die tangentialen Führungs- und Anlageflächen 29 gebildete Kerbverzahnungs-Wellenprofil in das Nabenprofil am Werkzeughalter 21 ein, das durch dessen tangentiale Führungs- und Anlageflächen 28 gebildet wird. Beim Erreichen der axialen Endstellung des Werkzeugkopfes 22 legt sich seine kegelstumpfförmige Führungs- und Anlagefläche 27 an der Gegenfläche, der kegelstumpfförmigen Führungs- und Anlageflächen 26 am Werkzeughalter 21 an. Dadurch wird der Werkzeugkopf 22 gegenüber dem Werkzeughalter 21 zentriert. Diese Stellung des Werkzeugkopfes 22 ist aus Fig. 1 ersichtlich.

Durch Betätigen der Zugvorrichtung 39 wird die Zugstange 77 in axialer Richtung vom Werkzeugkopf 22 wegbewegt. Sie nimmt dabei die Spannzange 38 aus ihrer Löse- oder Freigabestellung (Fig. 2) in die Spannstellung (Fig. 1) mit. Dabei bewegen sich die Spannbacken 55 zunächst axial und zugleich radial einwärts, solange die kegelstumpfförmigen Führungsflächen 65 und 66 sowie 73 und 74 aneinander entlanggleiten. Dabei bewegen sich die kegelstumpfförmigen Kupplungsflächen 57 und 58 der Spannzange 38 entlang einer Kegelmantellinie auf die gemeinsame Achse 32 zu, bis sie sich im gleichen Halbmesserbereich wie die Kupplungsflächen 51 und 52 am Spannbolzen 37 befinden. Dabei ist sowohl in axialer Richtung wie auch in radialer Richtung ein gewisses Spiel zwischen den verschiedenen Innenflächen der Spannzange 38 und den ihnen gegenüberliegenden Außenflächen des Spannbolzens 37. Im zweiten Abschnitt ihrer Spannbewegung bewegen sich die Spannbacken 55 rein axial so lange in Richtung auf ihre Spannstellung hin, bis ihre kegelstumpfförmigen Kupplungsflächen 57 und 58 sich an den Kupplungsflächen 51 und 52 des Spannbolzens 37 anlegen. Durch eine Steigerung der Zugkraft an der Zugstange 77 führen die Spannbacken 55 mit ihren Kupplungsflächen 57 und 58 auf den Kupplungsflächen 51 und 52 des Spannbolzens 37 eine kleine Relativbewegung in Richtung ihrer gemeinsamen Mantellinien aus, wodurch das radiale Spiel zwischen den äußeren zylindrischen Führungsflächen 63 und 64 der Spannbacken 55 und den inneren zylindrischen Führungsflächen 71 und 72 des Führungsteils 69 beseitigt wird und die Spannbacken 55 sowohl nach innen in Richtung auf den Spannbolzen 37 hin wie auch nach außen in Richtung auf den Führungsteil 69 hin eine radiale Spannkraftkomponente ausüben, die von einer axialen Spannkraftkomponente begleitet wird.

Im folgenden werden anhand Fig. 6 bis 9 einige weitere Ausführungsbeispiele des Werkzeuges erläutert, die hinsichtlich der Anordnung und/oder Ausbildung der tangentialen Kupplungsflächen abgewandelt sind.

Bei der aus Fig. 6 ersichtlichen Ausführungsform des Werkzeugs sind wie bisher am Werkzeughalter 81 und am Werkzeugkopf 82 je eine als Innenkonus bzw. als Außenkonus ausgebildete kegelstumpfförmige Führungs- und Anlagefläche 83 bzw. 84 vorhanden, die der axialen und radialen Kupplung der beiden Werkzeugteile dienen. Sowohl der Werkzeughalter 81 wie auch der Werkzeugkopf 82 sind mit tangentialen Kupplungsflächen 85 bzw. 86 versehen, die an beiden Werkzeugteilen als Wellenprofil ausgebildet sind. Im einzelnen handelt es sich bei den tangentialen Kupplungsflächen 85 und 86 vorzugsweise wieder um eine Kerbverzahnung. Beide Wellenprofile sind hinsichtlich der Profilmerkmale der Kerbverzahnung einander gleich. Die Kupplung dieser beiden in axialer Richtung nebeneinander liegenden Wellenprofile übernimmt ein zusätzliches Kupplungsteil in Form einer Kupplungshülse 87. Sie ist auf ihrer Innenseite mit tangentialen Kupplungsflächen 88 versehen, die als Nabenprofil ausgebildet ist, welches auf die Wellenprofile der Kupplungsflächen 85 und 86 abgestimmt ist.

Zur Festlegung der Kupplungshülse 87 an einem der beiden Werkzeugteile, und zwar bevorzugt am Werkzeughalter 81, ist eine Arretiervorrichtung 89 für die Kupplungshülse 87 vorhanden. Dazu weist die Kupplungshülse 87 auf der vom Werkzeugkopf 82 abgekehrten Seite einen in axialer Richtung über die tangentialen Kupplungsflächen 85 des Werkzeughalters 81 hinausragenden Längenabschnitt 91 auf, an dessen Innenseite im Halbmesserbereich ihrer tangentialen Kupplungsflächen 88 eine Umfangsnut 92 vorhanden ist. Darin ist ein Sprengring 93 mit kreisrunder Querschnittsfläche eingesetzt. Da die Umfangsnut 92 an der Kupplungshülse 87 im Halbmesserbereich ihres Nabenprofils mit den Kupplungsflächen 88 liegt, liegt der in die Umfangsnut eingesetzte Sprengring 93 zugleich auch im Halbmesserbereich des Wellenprofils mit den Kupplungsflächen 85 am Werkzeughalter 81. Die vom Werkzeugkopf 82 abgekehrte Stirnseite des Wellenprofils 85, der Sprengring 93 und die dem Werkzeugkopf 82 zugekehrte Seite der Umfangsnut 92 im Nabenprofil 88 bilden zusammen einen Axialanschlag für die Kupplungshülse 87, der in Richtung auf den Werkzeugkopf 82 hin wirksam ist. In der umgekehrten Richtung wird der Axialanschlag für die Kupplungshülse 87 durch einen Sicherungsring 94 gebildet, der in eine auf ihn abgestimmte Umfangsnut 95 an der Außenseite des Werkzeughalters 81 eingesetzt ist.

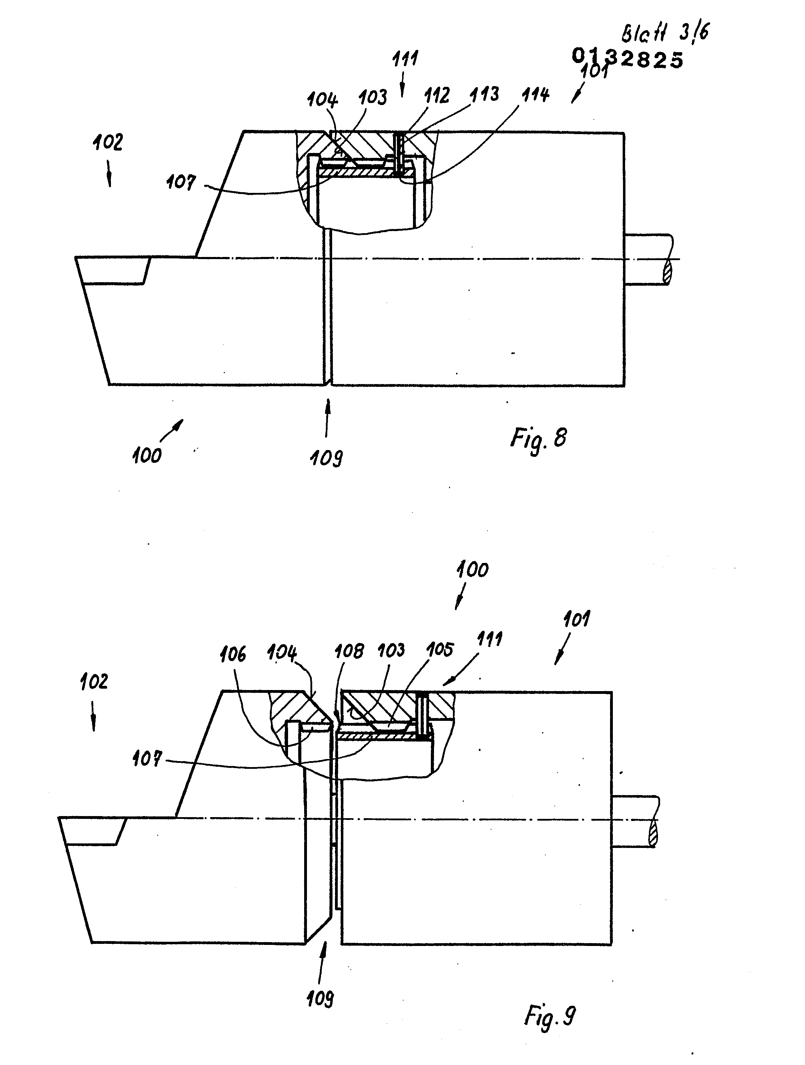

Die aus Fig. 7 ersichtliche Ausführungsform des Werkzeugs ist gegenüber der aus Fig. 6 ersichtlichen Ausführungsform hinsichtlich eines Teils der Arretiervorrichtung für die Kupplungshülse 87 abgewandelt.

Für den in Richtung auf den Werkzeugkopf 82 hin wirksamen Anschlag ist die Kupplungshülse 87 wie bisher mit einer Umfangsnut 92 versehen, in die der Sprengring 93 eingesetzt ist, der sich wiederum an dem Wellenprofil 85 anlegt. Die Umfangsnut 95' für den Sicherungsring 94 und dieser selbst sind in einer gewissen axialen Entfernung vom Ende der Kupplungshülse 87 angeordnet. Zwischen der Kupplungshülse 87 und dem Sicherungsring 49 ist eine Schraubendruckfeder 96 eingesetzt, die auf der Außenseite des Werkzeughalters 81' geführt ist und die sich mit ihren Enden über je einen scheibenförmigen Federteller 97 bzw. 98 an der ihr zugekehrten Stirnseite der Kupplungshülse 87 bzw. am Sicherungsring 94 abstützt. Durch diese Ausbildung der Arretiervorrichtung erhält die Kupplungshülse 87 in Richtung auf den Werkzeugkopf hin einen festen Anschlag, wohingegen sie in der entgegengsetzten Richtung elastisch nachgiebig abgestützt ist.

Bei dem aus Fig. 8 und 9 ersichtlichen Ausführungsbeispiel des Werkzeugs 100 liegen der Werkzeughalter 101 und der Werkzeugkopf 102 axial und radial wieder an zwei kegelstumpfförmigen Führungs- und Anlageflächen 103 bzw. 104 aneinander an. Für die tangentiale Kupplung ist sowohl am Werkzeughalter 101 wie auch am Werkzeugkopf 102 auf der Innenseite je ein Kerbzahn-Nabenprofil mit tangentialen Kupplungsflächen 105 bzw. 106 vorhanden. Diese hinsichtlich der Profilgestaltung und des Halbmesserbereiches untereinander gleichen Nabenprofile werden durch eine Kupplungshülse 107 miteinander gekoppelt, die mit einem darauf abgestimmten Wellenprofil mit tangentialen Kupplungsflächen 108 versehen ist. Bei dieser innenliegenden tangentialen Kupplung können der Werkzeughalter 101 und der Werkzeugkopf 102 im Bereich der Trennstelle 109 völlig glatt ausgeführt werden.

Die auch bei dieser Ausführungsform der tangentialen Kupplung wünschenswerte Arretiervorrichtung könnte ähnlich der aus Fig. 6 ersichtlichen Arretiervorrichtung ausgebildet sein, wobei man bei der innenliegenden Kupplungshülse 107 einen inneren Absatz des Werkzeughalters 101 als axialen Anschlag heranziehen könnte. Die aus Fig. 8 und 9 ersichtliche abgewandelte Ausführungsform der Arretiervorrichtung 111 weist einen Arretierstift 112 auf. Dazu gehören ein zylindrisches Durchgangsloch 113 in einem außengelegenen Wandteil des Werkzeughalters 101 und ein ebenfalls zylindrisches Durchgangsloch 114 in der Kupplungshülse 107. Die beiden Durchgangslöcher 113 und 114 sind radial ausgerichtet und fluchten miteinander. Sie sind in einem Längenabschnitt des Werkzeughalters 102 und der Kupplungshülse 107 angeordnet, der außerhalb des Nabenprofils mit den tangentialen Kupplungsflächen 105 gelegen ist. Zweckmäßigerweise ist das Durchgangsloch 103 auf den Außendurchmesser des Arretierstiftes 112 so abgestimmt, daß dort eine Treibsitzpassung entsteht. Das Durchgangsloch 114 in der Kupplungshülse 107 ist etwas größer ausgeführt, so daß mindestens eine Schiebesitzpassung oder besser noch eine Spielpassung entsteht. Dadurch legt der Arretierstift 112 die Kupplungshülse 107 zwar in axialer Richtung einigermaßen fest, hindert sie aber nicht daran, daß sie sich mit ihrem Wellenprofil in radialer und tangentialer Richtung auf das Nabenprofil am Werkzeughalter 101 und am Werkzeugkopf 102 einstellen kann.

Im Bedarfsfall kann der Arretierstift 112 von außen her in den Innenraum des Werkzeughalters 101 hineingestoßen werden, so daß dann die Kupplungshülse 107 aus dem Werkzeughalter 101 herausgezogen werden kann. Aus diesem Grunde ist es zweckmäßig, für den Arretierstift 111 einen Spannstift zu wählen. Es kommen aber auch Kerbstifte in Betracht, wenn nur selten damit zu rechnen ist, daß die Kupplungshülse 107 aus dem Werkzeughalter 101 herausgenommen werden muß.

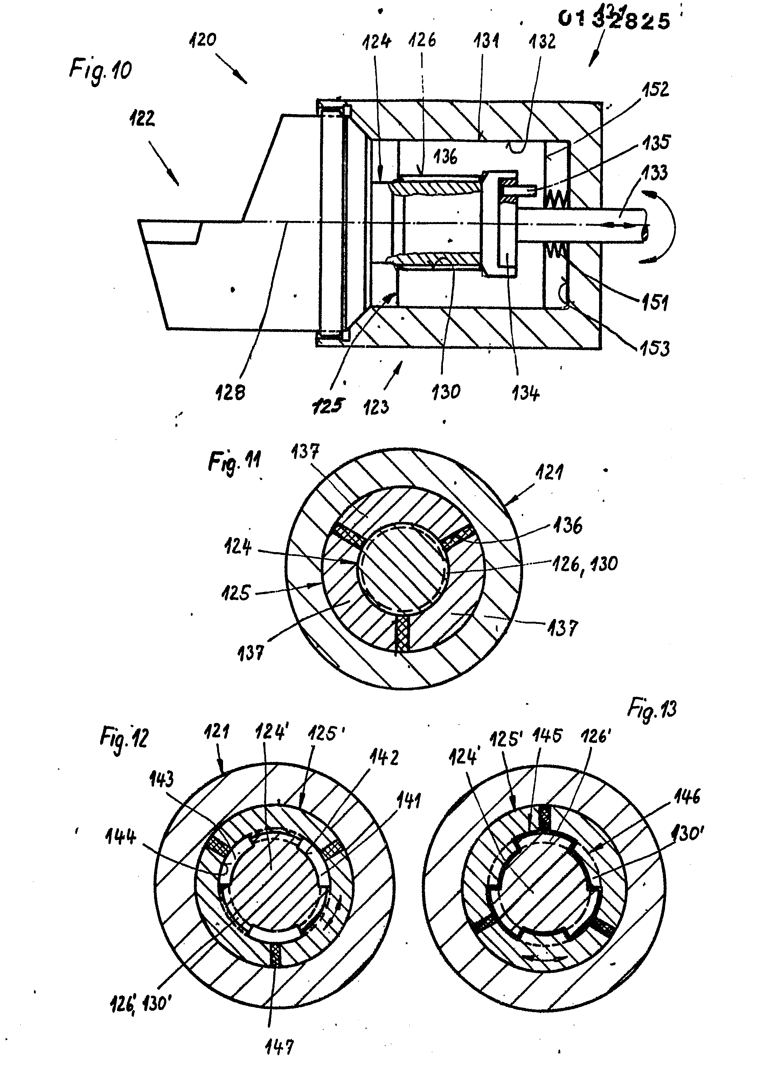

Im folgenden wird anhand Fig. 10 bis 12 ein weiteres Ausführungsbeispiel mit einer abgewandelten Spannvorrichtung erläutert.

Bei dem Werkzeug 120 sind der Werkzeughalter 121 und der Werkzeugkopf 122 an dem einander jeweils zugekehrten Ende auf eine der zuvor beschriebenen Arten mittels kegelstumpfförmiger Führungs- und Anlageflächen und mittels tangentialer Kupplungsflächen miteinander gekuppelt.

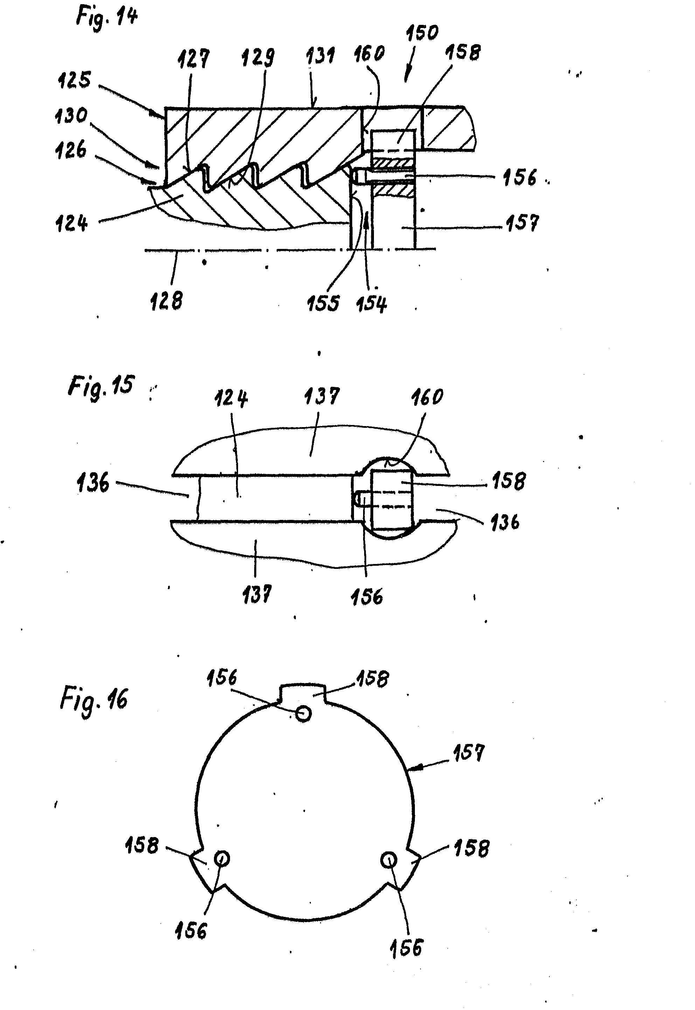

Die Spannvorrichtung 123 weist einen Spannbolzen 124 und eine Spannzange 125 auf. Der Spannbolzen 124 ist in der beschriebenen Weise mit dem Werkzeugkopf 122 verbunden. Für die Kupplung mit der Spannzange 125 weist der Spannbolzen 124 ein zylindrisches Bolzengewinde 126 auf (Fig. 14). Die dem Werkzeugkopf 122 zugekehrte Gewindeflanke bildet die Kupplungsfläche 127 des Spannbolzens 124. Sie hat gegenüber der gemeinsamen Achse 128 einen Neigungswinkel, der zwischen 22,5° und 45°, bevorzugt bei zumindest annähernd 30°, liegt. Die andere Gewindeflanke hat einen größeren Neigungswinkel, beispielsweise von annähernd 3°, wie er bei Sägezahngewinde üblich ist. Die Kupplungsfläche 129 an der Spannzange 125 wird durch die vom Werkzeugkopf 122 abgekehrte Flanke eines zylindrischen Muttergewindes 130 gebildet, das auf das Bolzengewinde 126 des Spannbolzens 124 abgestimmt ist.

Die äußere Führungsfläche 131 der Spannzange 125 ist eine glatte Kreiszylinderfläche. Dementsprechend ist auch die innere Führungsfläche 132 am Werkzeughalter 122 eine glatte Kreiszylinderfläche.

Die Spannzange 125 ist mit einer Drehvorrichtung gekoppelt, die ihre Drehbewegung beispielsweise mittels der Zugstange 133 und deren Zugkopf 134 auf die Spannzange 125 überträgt. Zu diesem Zweck sind am Zugkopf 134 Mitnehmerstifte 135 angeordnet, die in die Schlitze 136 zwischen je zwei einander benachbarten Spannbacken 137 der Spannzange 125 eingreifen.

Eine als Werkzeug 120' gegenüber dem Werkzeug 120 zum Teil abgewandelte und zum Teil übereinstimmende Ausführungsform ist aus Fig. 12 und 13 ersichtlich, wobei die Fig. 10 weitgehend als zugehöriger Längsschnitt dienen kann. Die zumindest teilweise übereinstimmenden und teilweise abgewandelten Teile werden mit den gleichen Bezugszahlen bezeichnet, die zur Unterscheidung mit einem Apostroph versehen sind.

Am Spannbolzen 124' sind Längsnuten 141 vorhanden, die parallel zur gemeinsamen Achse 128 ausgerichtet sind. Sie erstrecken sich vom freien Ende des Spannbolzens 124' in Richtung auf den Werkzeugkopf 122 hin bis über den letzten Gewindegang des Bolzengewindes 126' hinaus. Der Nutgrund 142 dieser Längsnuten 141 hat von der gemeinsamen Achse 128 einen radialen Abstand, der kleiner als der halbe Kerndurchmesser des Bolzengewindes 126' ist. Die Längsnuten 41 sind am Umfang gleichmäßig verteilt angeordnet. Ihre Umfangserstreckung ist zumindest annähernd gleich der Gesamtumfangslänge geteilt durch die doppelte Anzahl der Längsnuten.

An der Innenseite der Spannzange 125' sind ebenfalls Längsnuten 143 vorhanden. Diese sind ebenfalls zur gemeinsamen Achse 128 ausgerichtet. Sie erstrecken sich vom freien Ende der Spannzange 125 vom Werkzeugkopf 122 weg bis über den letzten Gewindegang des Bolzengewindes 126' am Spannbolzen 124' hinaus. Ihr Nutgrund 144 hat einen radialen Abstand von der gemeinsamen Achse 128, der größer als der Außenhalbmesser des Bolzengewindes 126' am Spannbolzen 124' ist. Sie sind in der gleichen Weise gleichmäßig am Umfang verteilt wie die Längsnuten 142 am Spannbolzen 124'. Ihre Umfangserstreckung ist etwas größer als die Umfangserstreckung der zwischen den Längsnuten 141 am Spannbolzen 124 stehengebliebenen Umfangsabschnitte 145 des Bolzengewindes 126' mit den Kupplungsflächen 129'. Im Hinblick darauf, daß die Umfangsabschnitte 145 des Bolzengewindes 126' von einem kleineren Halbmesser ausgehen als die entsprechenden Umfangsabschnitte 146 des Muttergewindes 130', ist es von Vorteil, wenn die Längsnuten 142 am Spannbolzen 124 schmäler ausgeführt werden als die Längsnuten 143 an der Spannzange 125'. Dadurch wird die mechanische Belastbarkeit der Umfangsabschnitte 145 am Spannbolzen 124' und der Umfangsabschnitte 146 an der Spannzange 125' etwa gleich groß.

An der Spannzange 125' liegen die Trennschlitze 136' im gleichen Umfangsbereich wie ihre Längsnuten 143, und zwar vorzugsweise in deren Mitte. Die als Federelement 147 für die Spannbacken 137' in den Schlitzen 136' angeordnete gummielastische Masse sollte nicht nach innen in die Längsnuten 143 überstehen.

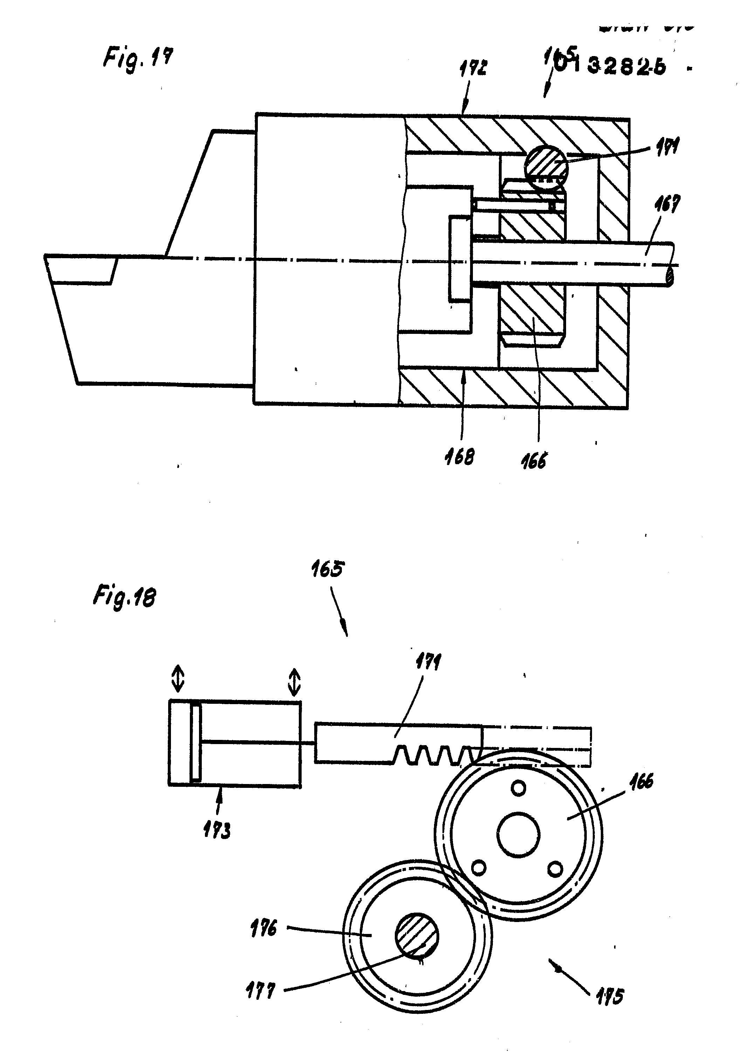

Um das Einscheren der Gewindegänge der Umfangsabschnitte 145 am Spannbolzen 126' in die Gewindeganglücken der Umfangsabschnitte 146 des Muttergewindes 130' zu erleichtern, kann eine aus Fig. 14 bis 16 ersichtliche Leitvorrichtung 150 eingesetzt werden.

Sie weist eine Feder 151 auf, die zwischen der vom Werkzeugkopf 122 abgekehrten Stirnseite 152 der Spannzange 125' und einer ihr axial gegenüberstehenden Stirnwand 153 des Werkzeughalters 121 angeordnet ist. Die Feder 151 ist vorzugsweise als Tellerfedersatz ausgebildet, dessen Tellerfedern auf der Zugstange 133 geführt werden. Die Leitvorrichtung 150 weist außerdem in der axialen Fluchtlinie jeder Längsnut 143 der Spannzange 125' je einen Anschlag 154 auf. Dieser ist in der Bewegungsbahn des mit den Kupplungsflächen 127' versehenen Teils des Spannbolzens 124' in axialer Richtung an derjenigen Stelle angeordnet, an der die nichttragende Gewindeflanke 155 des vordersten Gewindeganges des Bolzengewindes 126' gerade an dem Anschlag 154 anliegt, wenn die Umfangsabschnitte 145 der Gewindegänge am Spannbolzen 125' gerade mit den Lücken der Umfangsabschnitte 146 des Muttergewindes 130' fluchten. Dadurch fluchten auch die Kupplungsflächen 127' am Spannbolzen 125' und die Kupplungsflächen 129' an der Spannzange 125' miteinander. Durch eine Drehung der Spannzange 125' werden ihre Kupplungsflächen 129 und die Kupplungsflächen 127 am Spannbolzen 125' miteinander zur Deckung gebracht und damit in axialer Richtung eingekuppelt.

Jeder der Anschläge 154 wird durch einen Gewindestift 156 gebildet, der in eine Gewindebohrung einer Anschlagscheibe 157 eingeschraubt ist. Die Anschlagscheibe 157 hat eine Außenabmessung, die kleiner als der doppelte Innenhalbmesser des Muttergewindes 130' ist. Sie hat eine der Anzahl der Längsnuten 143 an der Spannzange 125' entsprechende Anzahl radialer Vorsprünge 158, an denen sich je eine der Gewindebohrungen für einen der Gewindestifte 156 befindet. Die Vorsprünge 158 haben eine radiale Erstreckung, die geringfügig größer als der Halbmesser der Innenfläche 159 ist, die an das Muttergewinde 130' anschließt. In unmittelbarer Nachbarschaft des innengelegenen Endes des Muttergewindes 130' sind im Bereich der Schlitze 136' je eine Ausnehmung 160 vorhanden. Die axialen und tangentialen Abmessungen der Ausnehmungen 160 und der Vorsprünge 158 sind so aufeinander abgestimmt, daß die Vorsprünge 158 in die Ausnehmungen 160 hineinpassen und sich an deren Wandung in axialer Richtung anlegen können. Die radiale Überdeckung der Vorsprünge 158 und der Ausnehmungen 160 wird höchstens so groß gewählt,wie die Spannbacken 137' aufgrund der Elastizität der zwischen ihnen befindlichen gummielastischen Masse das Auseinanderspreizen der Spannbacken 137' zuläßt. Falls das im Einzelfalle nicht ausreicht, können an der Anschlagscheibe 157 anstelle der einstückig mit ihr ausgebildeten Vorsprünge 158 auch selbsthaltende Stifte wie Spannstifte oder Kerbstifte oder auch Gewindestifte in entsprechende radiale Bohrungen der Anschlagscheibe eingesetzt werden. Mit diesen ist dann ein größerer radialer Überdeckungsgrad möglich.

Die Leitvorrichtung 150 wirkt mit der Spannvorrichtung 123' in der Weise zusammen, daß nach dem Auftreffen der vordersten Gewindeflanke 155 oder der ihr einwärts benachbarten Stirnfläche des Spannbolzens 124' die Spannzange 125' entgegen der Kraft der Feder 155 etwas zurückgeschoben wird. Dabei bleiben ihre Kupplungsflächen 129' ständig in der tangentialen Fluchtlinie der Kupplungsflächen 127' des Spannbolzens 124'. Nach dem Einkuppeln der Kupplungsflächen 127' und 129' wird die Spannzange 125' zusammen mit dem Spannbolzen 124' von der Zugstange 133 vollends in die Spannstellung gezogen. Dabei gibt die verhältnismäßig schwache Feder 151 ausreichend weit nach.

Eine weitere abgewandelte Ausführungsform des Werkzeuges ergibt sich daraus, daß bei der Spannvorrichtung 123'' mit den Längsnuten 141 und 143 - bei sonst weitgehender Übereinstimmung der übrigen Merkmale - die Kupplungsflächen 127'' am Spannbolzen 124'' und die Kupplungsflächen 129'' an der Spannzange 125' als Kegelstumpfflächen ausgebildet sind, die das gleiche Längsschnittprofil (Fig. 14) wie die Umfangsabschnitte 145 und 146 mit dem Bolzengewinde 126' bzw. mit dem Muttergewinde 130' haben. Die dort gemachten Ausführungen gelten hier entsprechend. Auch bei der Spannvorrichtung 123'' kann die Leitvorrichtung 150 vorteilhaft eingesetzt werden.

Aus Fig. 17 und 18 sind zwei unterschiedliche Drehvorrichtungen für das Verdrehen der Spannzange ersichtlich.

Bei der Ausführunsform nach Fig. 17 weist die Drehvorrichtung 165 ein Zahnrad 166 auf, das einfach auf der Zugstange 167 der betreffenden Spannvorrichtung drehbar gelagert ist. Das Zahnrad 166 ist mit der Spannzange 168 mittels mehrerer Kupplungsstifte 169 in tangentialer Richtung gekuppelt, die am Zahnrad 166 in axial ausgerichteten zylindrischen Durchgangslöchern sitzen und sich in axialer Richtung bis in die Schlitze zwischen zwei Spannbacken der Spannzange 168 hineinerstrecken. Parallel zu einer Tangentialebene der Verzahnung des Zahnrades 166 ist eine Zahnstange 171 am Werkzeughalter 172 längsverschiebbar geführt. Die Zahnstange 171 ist innerhalb oder außerhalb des Werkzeughalters 172 mit einem linearen Verstellantrieb 173 gekoppelt, der beispielsweise als pneumatischer oder hydraulischer Kolbenantrieb ausgebildet ist. Stattdessen kommt aber auch ein Gewindespindelantrieb mit einem Drehmotor in Betracht.

Wenn die Zahnstange 171 in ihrer Ruhestellung außerhalb der Verzahnung des Zahnrades 166 steht, kann das Zahnrad 166 und die mit ihm drehfest verbundenen Teile entweder frei gedreht werden oder mittels einer anderen Drehvorrichtung in eine bestimmte Drehstellung gebracht werden. Nach dem Betätigen des Verstellantriebes 173 bewegt sich die Zahnstange 171 um eine bestimmte Wegstrecke, wobei sie in die Verzahnung des Zahnrades 166 eingreift und dieses um einen entsprechenden Drehwinkel verdreht. Wenn die Zahnstange 171 hingegen so ausgeführt und angeordnet ist, daß sie ständig mit dem Zahnrad 166 kämmt, dann kann dieses nicht mehr frei gedreht werden und vermag nur noch die von der Zahnstange 171 ausgelösten Drehbewegungen auszuführen.

Aus Fig. 18 ist noch eine zweite Drehvorrichtung 175 ersichtlich. Diese weist ein Zahnrad 176 auf, das ständig mit dem Zahnrad 166 kämmt, welches mit der zugehörigen Spannzange 168 drehfest gekoppelt ist. Das Zahnrad 176 ist über eine Welle 177 mit einem nicht dargestellten Drehantrieb verbunden, bei dessen Betätigung über das Zahnrad 176 und das Zahnrad 166 die Spannzange entweder um einen bestimmten Drehwinkel oder auch um mehrere Umdrehungen gedreht werden kann, wie das bei einer Spannvorrichtung erforderlich ist, bei der der Spannbolzen und die Spannzange mittels eines Gewindes miteinander gekuppelt werden.

Teilbares Werkzeug für die spanabhebende Bearbeitung

## Ansprüche

1. Teilbares Werkzeug für die spanabhebende Bearbeitung mit folgenden Merkmalen:
   1. Es ist ein Werkzeughalter ( 21 ) für die Befestigung an einer Werkzeugmaschine vorhanden,
   2. es ist ein Werkzeugkopf ( 22 ) mit der Werkzeugschneide (23) vorhanden,
   3. der Werkzeughalter ( 21 ) und der Werkzeugkopf ( 22 ) sind an einer Trennstelle ( 24 ) voneinander trennbar und
   4. mittels einer Kupplungsvorrichtung ( 25 ) miteinander verbindbar,

   4.1. die Kupplungsvorrichtung ( 25 ) weist aufeinander abgestimmte Führungs- und Anlageflächen (26, 27; 28, 29 ) auf, die teils am Werkzeughalter ( 21 ) und teils am Werkzeugkopf ( 22 ) mittig zu einer gemeinsamen Achse ( 32 ) angeordnet sind,

   4.2. die Kupplungsvorrichtung ( 25 ) weist eine Spannvorrichtung ( 31 ) auf, die mittig zur gemeinsamen Achse ( 32 ) angeordnet ist,

4.2.1. die Spannvorrichtung (31) weist einen Spannbolzen (37) auf,

4.2.1.1. der mit dem Werkzeugkopf (22) verbunden ist, und

4.2.1.2. der mit einer oder mehreren Kupplungsflächen (51, 52) versehen ist, deren Flächennormale eine radial auswärts gerichtete Komponente und eine zum Werkzeugkopf (22) hin gerichtete axiale Komponente hat, wobei bei mehreren Kupplungsflächen (51, 52) ihre Flächennormalen untereinander parallel ausgerichtet sind,

4.2.2. die Spannvorrichtung (31) weist eine Spannzange (38) auf, die durch mehrere Längsschlitze in voneinander getrennte Spannbacken (55) unterteilt ist, die mittels Halteelemente oder Federelemente (56) zusammengehalten werden,

4.2.2.1. die Spannzange (38) ist im Werkzeughalter (22) untergebracht,

4.2.2.2. die Spannzange (38) ist auf ihrer Innenseite mit einer oder mehreren Kupplungsflächen (57, 58) versehen, deren Flächennormale die umgekehrte Ausrichtung wie die Flächennormale der Kupplungsflächen (51, 52) am Spannbolzen (37) hat, die mindestens in der Spannstellung zumindest teilweise in den gleichen axialen Abschnitten und im gleichen Halbmesserbereich wie die Kupplungsflächen (51, 52) am Spannbolzen (37) angeordnet sind und an diesen anliegen,

4.2.2.3. die Spannzange (38) ist auf ihrer Außenseite mit wenigstens einer äußeren Führungsfläche (65, 66) versehen,

4.2.2.4. die Spannzange (38) weist an ihrem vom Werkzeugkopf (21) abgekehrten Ende in ihrem Inneren eine dek Werkzeugkopf (22) zugekehrte ebene kreisringförmige Anlagefläche (76) auf, deren Flächennormale parallel zur gemeinsamen Achse (32) ausgerichtet ist,

4.2.3. die Spannvorrichtung ( 31 ) weist eine mit einem Kraftantrieb verbindbare oder verbundene Zugstange ( 77 ) auf, die mittig zur gemeinsamen Achse ( 32 ) angeordnet ist und sich bis in den Innenraum der Spannzange ( 38 ) hineinerstreckt,

4.2.3.1. die Zugstange ( 77 ) ist an ihrem in den Innenraum der Spannzange ( 38 ) hineinragenden Ende mit einem Zugkopf ( 78 ) versehen,

4.2.3.1.1. der eine vom Werkzeugkopf ( 22 ) abgekehrte ebene kreisringförmige Anlagefläche ( 79 ) aufweist, die zumindest teilweise im gleichen Halbmesserbereich wie die Anlagefläche ( 76 ) der Spannzange ( 38 ) gelegen ist,

4.2.4. die Spannvorrichtung ( 31 ) weist für jede äußere Führungsfläche (65, 66 ) an der Spannzange ( 38 ) eine innere Führungsfläche (73, 74) auf, 4.2.4.1. die im Inneren des Werkzeughalters ( 21 ) an diesem oder an einem mit ihm verbundenen Teil ( 69 ) angeordnet ist,

4.2.4.2. die zumindest in einem bestimmten Abschnitt des axialen Bewegungsbereiches der äußeren Führungsfläche ( 65, 66) der Spannzange ( 38 ) im gleichen Axialbereich angeordnet ist und

4.2.3. deren Flächennormale die umgekehrte Ausrichtung wie die Flächennormale der äußeren Führungsfläche ( 65, 66 ) an der Spannzange ( 38 ) hat,

g e k e n n z e i c h n e t durch folgende Merkmale:

4.1.1. als erste Führungs- und Anlageflächen ( 26, 27 ) sind am Werkzeughalter ( 21 ) und am Werkzeugkopf ( 22 ) je eine aufeinander abgestimmte Kegelstumpffläche( 26, 27 ) vorhanden, die zumindest annähernd im gleichen Halbmesserbereich gelegen sind,

4.1.2. als zweite Führungs- und Anlageflächen sind am Werkzeughalter (21) und am Werkzeugkopf (22) tangentiale Kupplungsflächen (28, 29) vorhanden, die paarweise zumindest annähernd im gleichen Halbmesserbereich und in der Kupplungsstellung zumindest annähernd im gleichen Axialbereich gelegen sind,

4.1.2.1. die als ebenen Flächen (33, 34) und/oder als Zylinderflächen ausgebildet sind, die selbst bzw. deren Mantellinien parallel zur gemeinsamen Achse (32) ausgerichtet sind und

4.1.2.2. deren Flächennormale mindestens eine tangentiale Komponente hat, und zwar davon mindestens eine in je einer der beiden Umfangsrichtungen.

2. Werkzeug nach Anspruch 1,
g e k e n n z e i c h n e t durch das Merkmal:
4.1.1.1. von den beiden Kegelstumpfflächen (26, 27) ist die am Werkzeughalter (21) vorhandene Kegelstumpffläche (26) als Innenkonus ausgebildet und ist die am Werkzeugkopf (22) vorhandene Kegelstumpffläche (27) als Außenkonus ausgebildet.

3. Werkzeug nach Anspruch 1 oder 2,
g e k e n n z e i c h n e t durch das Merkmal:
4.1.1.2. Die Kegelstumpfflächen (26, 27) sind auf einen kleinen Halbmesserbereich begrenzt, der bevorzugt in radialer Richtung entweder an die in axialer Richtung anschließende Umfangsfläche des zugeordneten Werkzeugteils (21, 22) oder an die ihm am nächsten gelegene Grenze des Halbmesserbereichs der tangentialen Kupplungsflächen (28, 29) anschließt.

4. Werkzeug nach einem der Ansprüche 1 bis 3, g e k e n n z e i c h n e t durch das Merkmal:

4.1.1.3. Die Kegelstumpfflächen (26, 27) haben einen Kegelspitzenwinkel der zwischen $60^{o}$ und $120^{o}$ liegt und bevorzugt zumindest annähernd $90^{o}$ beträgt.

5. Werkzeug nach einem der Ansprüche 2 bis 4, g e k e n n z e i c h n e t durch das Merkmal:

4.1.1.4. Die Mantellinien der Kegelstumpfflächen schneiden sich zumindest annähernd im Axialbereich der vom Werkzeugkopf am weitesten entfernten Kupplungsfläche des Spannbolzens, vorzugsweise an derjenigen Stelle, von cer aus ihre über die Kegelspitze hinausgehende Verlängerung diese Kupplungsfläche des Spannbolzens auf derjenigen Seite schneidet oder berührt, auf der die Flächennormale dieser Kupplungsfläche entgegengesetzt ausgerichtet ist wie die Flächennormale der Kegelstumpffläche, von der diese Mantellinie ausgeht.

6. Werkzeug nach einem der Ansprüche 1 bis 5, g e k e n n z e i c h n e t durch das Merkmal:

4.1.2.3. Die tangentialen Kupplungsflächen sind sowohl am Werkzeughalter (21) wie auch am Werkzeugkopf (22) untereinander im gleichen Halbmesserbereich angeordnet und bevorzugt am Umfang gleichmäßig verteilt angeordnet, wobei sie entweder ein Wellenprofil oder ein Nabenprofil bilden.

7. Werkzeug nach Anspruch 6,
g e k e n n z e i c h n e t durch das Merkmal:
4.1.2.3.1. Die tangentialen Kupplungsflächen ( 28, 29 ) sind als Kerbzahnprofil ausgebildet.

8. Werkzeug nach Anspruch 6,
g e k e n n z e i c h n e t durch das Merkmal:
4.1.2.3.2. Die tangentialen Kupplungsflächen (28' 29') sind als Vielnutprofil ausgebildet.

9. Werkzeug nach einem der Ansprüche 6 bis 8,
g e k e n n z e i c h n e t durch das Merkmal:
4.1.2.3.3. Die tangentialen Kupplungsflächen (28, 29 ) sind als Nabenprofil am Werkzeughalter ( 21 ) und als Wellenprofil am Werkzeugkopf ( 22 ) angeordnet oder umgekehrt.

10. Werkzeug nach einem der Ansprücbe 6 bis 8,
g e k e n n z e i c h n e t durch die Merkmale:
4.1.2.3.4. Die tangentialen Kupplungsflächen ( 85, 86 ) sind entweder als Wellenprofil oder als Nabenprofil sowohl am Werkzeughalter ( 81 ) wie auch am Werkzeugkopf ( 82 ) angeordnet,
4.1.2.3.5. es ist ein zusätzliches Kupplungsteil, vorzugsweise in Form einer Kupplungshülse ( 87 ) vorhanden, an der zu den erstgenannten Kupplungsflächen ( 85, 86 ) passende Kupplungsflächen ( 88 ) als Nabenprofil bzw. als Wellenprofil angeordnet sind.

11. Werkzeug nach Anspruch 10,
g e k e n n z e i c h n e t durch das Merkmal:
4.1.2.3.6. An einem der Werkzeugteile, vorzugsweise am Werkzeughalter (81), ist für Kupplungshülse (87) eine in axialer Richtung wirkende Arretiervorrichtung ( 89 ) vorhanden.

12. Werkzeug nach Anspruch 11,
g e k e n n z e i c h n e t durch die Merkmale:
4.1.2.3.6.1. In einem axialen Abschnitt, der dem die Kupplungshülse (107) und das zugeordnete Werkzeugteil (101) axial einander überschneiden, weist von diesen beiden Teilen der außen gelegene Teil (101) ein vorzugsweise radial ausgerichtetes und zylindrisch ausgebildetes Durchgangsloch (113) und der innen gelegene Teil (107) eine damit fluchtende Ausnehmung auf, die als Sackloch oder bevorzugt als Durchgangsloch (114) ausgebildet ist,
4.1.2.3.6.2. in die miteinander fluchtenden Löcher (113,114) ist ein vorzugsweise selbst haltender Arretierungsstift (112) eingesetzt, der bevorzugt als Spannstift oder als Kerbstift ausgebildet ist.

13. Werkzeug nach Anspruch 11,
g e k e n n z e i c h n e t durch die Merkmale:
4.1.2.3.6.3. Die Kupplungshülse ( 87 ) weist, bevorzugt auf der vom Werkzeugkopf ( 82 ) abgekehrten Seite, einen in axialer Richtung über die tangentialen Kupplungsflächen ( 85 ) des zugeordneten Werkzeugteils ( 81 ) hinausragenden Längenabschnitt ( 91 ) auf, worin im Halbmesserbereich ihrer tangentialen Kupplungsflächen ( 88 ) eine Umfangsnut ( 92 ) und ein darin eingesetzter Sicherungsring oder Sprengring ( 93 ) vorhanden sind,

4.1.2.3.6.4. neben dem Ende dieses Längenabschnittes ( 91 ) der Kupplungshülse ( 87 ) ist in dem zugeordneten Werkzeugteil ( 81 ) eine Umfangsnut ( 95 ) für die Aufnahme eines Sicherungsringes ( 94 ) vorhanden, der in diese Nut ( 95 ) einsetzbar ist.

14. Werkzeug nach Anspruch 13, g e k e n n z e i c h n e t durch die Merkmale:
4.1.2.3.6.5. Die Nut (95') im Werkzeugteil (81') und der Sicherungsring ( 94 ) oder ein den gleichen Halbmesserbereich wie die Kupplungshülse (87) aufweisender Bund oder Absatz des Werkzeugteils sind in einer gewissen axialen Entfernung vom Ende der Kupplungshülse ( 87 ) angeordnet,
4.1.2.3.6.6. zwischen der Kupplungshülse ( 87 ) und dem Sicherungsring ( 94 ) oder dem Bund oder Absatz ist eine als Druckfeder wirkende Feder ( 96 ), vorzugsweise mit einer gewissen Vorspannung, eingesetzt.

15. Werkzeug nach einem der Ansprüche 1 bis 14, g e k e n n z e i c h n e t durch folgende Merkmale:
4.2.1.2.1. Die Kupplungsflächen (51, 52) am Spannbolzen (37) sind als Kegelstumpfflächen ausgebildet,
4.2.1.2.2. diese Kupplungsflächen (51, 52) haben untereinander den gleichen Innendurchmesser und den gleichen Außendurchmesser,
4.2.1.2.3. diese Kupplungsflächen (51, 52) haben einen bestimmten axialen Abstand untereinander,
4.2.1.2.4. an den kleineren Durchmesser der Kupplungsflächen (51, 52) schließt eine kreiszylindrische Übergangsfläche (53, 54) an,
4.2.2.2.1. die Kupplungsflächen (57, 58) an der Spannzange (38) sind - bezogen auf die gemeinsame Achse (32) - als Kegelstumpfflächen ausgebildet,

4.2.2.2.2. diese Kupplungsflächen (57, 58) haben untereinander den gleichen Innenhalbmesser und den gleichen Außenhalbmesser, der geringfügig größer als die entsprechenden Maße der Kupplungsflächen (51, 52) am Spannbolzen (37) sind,

4.2.2.2.3. diese Kupplungsflächen (57, 58) haben den gleichen axialen Abstand untereinander, den die Kupplungsflächen (51, 52) am Spannbolzen (37) haben,

4.2.2.3.1. die Spannzange (38) hat zwei oder mehr äußere Führungsflächen (63, 64), die - bezogen auf die gemeinsame Achse - als Kreiszylinderflächen ausgebildet sind, die untereinander den gleichen Außenhalbmesser haben,

4.2.2.2.3.2. an jede zylindrische Führungsfläche (63, 64) schließt an der vom Werkzeugkopf (22) abgekehrten Seite je eine kegelstumpfförmige Führungsfläche (65, 66) an, die sich von der zylindrischen Führungsfläche (63, 64) aus verjüngt, deren Flächennormale untereinander parallel ausgerichtet sind und deren Halbmesserdifferenz mindestens gleich oder größer als die Halbmesserdifferenz der Kupplungsflächen (51, 52) am Spannbolzen (37) ist,

4.2.2.3.3. an die kegelstumpfförmige Führungsfläche (65, 66) schließt eine Übergangsfläche (67, 68) an, die sich bis zum Anfang der benachbarten zylindrischen Führungsfläche (64) oder in Richtung auf das Ende der Spannzange (38) hin erstreckt und deren Außenhalbmesser nicht größer als der kleinste Halbmesser der kegelstumpfförmigen Führungsfläche (65, 66) ist,

4.2.4.4. am Werkzeughalter (21) oder an dem mit ihm verbundenen Teil (69) sind zwei oder mehr innere Führungsflächen (71, 72) vorhanden, die als Kreiszylinderflächen ausgebildet sind, die untereinander den gleichen Innendurchmesser haben, der zumindest annähernd gleich dem doppelten Außenhalbmesser der äußeren Führungsflächen (63, 64) an der Spannzange (38) ist,

4.2.4.5. an jede zylindrische Führungsfläche (71, 72) schließt an der dem Werkzeugkopf (22) zugekehrten Seite je eine kegelstumpfförmige Führungsfläche (73, 74) an, die sich von der zylindrischen Führungsfläche (71, 72) aus erweitert, deren Flächennormale untereinander parallel ausgerichtet sind und deren Halbmesserdifferenz mindestens gleich oder größer als die Halbmesserdifferenz der Kupplungsflächen (51, 52) am Spannbolzen (37) ist,

4.2.4.6. die Übergangsstellen zwischen je einer äußeren zylindrischen Führungsfläche (63, 64) und der ihr zugehörigen kegelstumpfförmigen Führungsfläche (65, 66) an der Spannzange (38) haben untereinander den gleichen axialen Abstand, den die Übergangsstellen zwischen je einer inneren zylindrischen Führungsfläche (71, 72) und der ihr zugehörigen kegelstumpfförmigen Führungsfläche (73, 74) an dem betreffenden Teil (69) des Werkzeughalters (21) untereinander haben, und

4.2.4.7. an die kegelstumpfförmige Führungsfläche (74) schließt eine Übergangsfläche (75) an, die sich bis zum Anfang der benachbarten inneren zylindrischen Führungsfläche (71), oder, soweit vorhanden, in Richtung auf das Ende des über die kegelstumpfförmige Führungsfläche (73) hinausragenden Längenabschnittes des Teils (69) des Werkzeughalters (21) hin erstreckt.

16. Werkzeug nach einem der Ansprüche 1 bis 14, gekennzeichnet durch folgende Merkmale:

4.2.1.2.5. Die Kupplungsflächen (161) am Spannbolzen (124'') sind als Kegelstumpfflächen ausgebildet,

4.2.1.2.6. diese Kupplungsflächen (161) haben untereinander den gleichen Innendurchmesser und den gleichen Außendurchmesser,

4.2.1.2.7. diese Kupplungsflächen (161), deren Anzahl vorzugsweise zwei oder mehr beträgt, haben untereinander den gleichen axialen Abstand,

4.2.1.2.8. an den kleineren Durchmesser einer Kupplungsfläche (161) schließt je eine Übergangsfläche (155) an, die sich bis zum Außendurchmesser der benachbarten Kupplungsfläche (127'') hin erstreckt,

4.2.1.3. am Spannbolzen (124'') sind Längsnuten (141'') vorhanden, die parallel zur gemeinsamen Achse (128) ausgerichtet sind, die vom freien Ende des Spannbolzens (124'') ausgehen und sich in Richtung auf den Werkzeugkopf (122) hin bis mindestens zur letzten Kupplungsfläche (127'') hin oder darüber hinaus erstrecken, deren Nutgrund (142'') einen radialen Abstand von der gemeinsamen Achse (128) hat, der höchstens gleich oder kleiner als der kleine Halbmesser der Kupplungsflächen (127'') am Spannbolzen (124'') ist, die am Umfang gleichmäßig verteilt angeordnet sind und die eine Umfangserstreckung haben, die zumindest annähernd gleich der durch die doppelte Anzahl der Längsnuten (141'') geteilte Gesamtumfangsfläche oder geringfügig kleiner ist,

4.2.2.2.4. die Kupplungsflächen (129'') an der Spannzange (125'') sind - bezogen auf die gemeinsame Achse (128) - als Kegelstumpfflächen ausgebildet,

4.2.2.2.5. diese Kupplungsflächen (129'') haben untereinander den gleichen Innehalbmesser und den gleichen Außenhalbmesser, die geringfügig größer als die entsprechenden Maße der Kupplungsflächen (127'') am Spannbolzen (124'') sind,

4.2.2.2.6. diese Kupplungsflächen (129'') haben untereinander den gleichen axialen Abstand, den die Kupplungsflächen (127'') am Spannbolzen (124'') untereinander haben,

4.2.2.2.7. an der Innenseite der Spannzange (125'') sind Längsnuten (143'') vorhanden, die parallel zur gemeinsamen Achse (128) ausgerichtet sind, die von dem dem Werkzeugkopf (122) zugekehrten freien Ende der Spannzange (125'') ausgehen und sich in Richtung auf die stirnseitige Anlagefläche für den Zugkopf (134) hin bis mindestens zu der in der Spannstellung am weitesten in die Spannzange (125'') eingedrungene Kupplungsfläche (127'') des Spannbolzens (124'') und einer etwa daran anschließenden Übergangsfläche (155'') hin oder darüber hinaus erstrecken, deren Nutgrund (144'') in der Spannstellung einen radialen Abstand von der gemeinsamen Achse (128) hat, der mindestens gleich oder größer als der Außenhalbmesser der Kupplungsflächen (127'') am Spannbolzen (124'') ist, die am Umfang gleichmäßig verteilt angeordnet sind und die eine Umfangserstreckung haben, die mindestens gleich oder größer als die Umfangserstreckung der zwischen den Längsnuten (141'') am Spannbolzen (124'') stehen gebliebenen Kupplungsflächen (145'') ist,

4.2.2.3.4. die äußere Führungsfläche (131'') der Spannzange (125'') ist - bezogen auf die gemeinsame Achse (128) - eine Kreiszylinderfläche,

4.2.2.3.5. die Spannzange (125'') ist mit einer Drehvorrichtung gekoppelt oder koppelbar,

4.2.4.8. die innere Führungsfläche (132) am Werkzeughalter (122) oder an einem mit ihm verbundenen Teil ist als Kreiszylinderfläche ausgebildet, deren Innendurchmesser zumindest annähernd gleich dem doppelten Außenhalbmesser der Spannzange (125'') ist.

17. Werkzeug nach einem der Ansprüche 1 bis 14, g e k e n n z e i c h n e t durch folgende Merkmale:

4.2.1.2.9. Die Kupplungsfläche (127) am Spannbolzen (124) wird durch die dem Werkzeugkopf (122) zugekehrte Flanke eines zylindrischen Bolzengewindes gebildet, das eine bestimmte Gewindesteigung hat und dessen tragende Flanke einen bestimmten Neigungswinkel gegenüber der gemeinsamen Achse (128) hat,

4.2.2.2.8. die Kupplungsfläche (129) an der Spannzange (125) wird durch die vom Werkzeugkopf (122) abgekehrte Flanke eines zylindrischen Muttergewindes gebildet, das auf das Bolzengewinde (126) des Spannbolzens (124) abgestimmt ist,

4.2.2.3.6. die äußere Führungsfläche (131) der Spannzange (125) ist - bezogen auf die gemeinsame Achse (128) - eine Kreiszylinderfläche,

4.2.2.3.7. die Spannzange (125) ist mit einer Drehvorrichtung gekoppelt oder koppelbar,

4.2.4.9. die innere Führungsfläche (132) am Werkzeughalter (121) oder an einem mit ihm verbundenen Teil ist als Kreiszylinderfläche ausgebildet, deren Innendurchmesser zumindest annähernd gleich dem doppelten Außenhalbmesser der Spannzange (125) ist.

8. Werkzeug nach Anspruch 17, gekennzeichnet durch die Merkmale:

4.2.1.2.10. Am Spannbolzen (124') sind Längsnuten (142) vorhanden, die parallel zur gemeinsamen Achse ausgerichtet sind, die vom freien Ende des Spannbolzens (124') ausgehen und sich in Richtung auf den Werkzeugkopf (122) hin bis mindestens zum letzten Gewindegang hin oder darüber hinaus erstrecken, deren Nutgrund (142) einen radialen Abstand von der gemeinsamen Achse (128) hat, der höchstens gleich oder kleiner als der halbe Kerndurchmesser des Bolzengewindes (126') ist, die am Umfang gleichmäßig verteilt angeordnet sind und die eine Umfangserstreckung haben, die zumindest annähernd gleich der durch die doppelte Anzahl der Längsnuten (141) geteilte Gesamtumfangslänge oder geringfügig kleiner ist,

4.2.2.2.9. an der Innenseite der Spannzange (125) sind Längsnuten (143) vorhanden, die parallel zur gemeinsamen Achse (128) ausgerichtet sind, die von dem dem Werkzeugkopf (122) zugekehrten freien Ende der Spannzange (125') ausgehen und sich in Richtung auf die stirnseitige Anlagefläche für den Zugkopf (134) hin bis mindestens zu dem in der Spannstellung am weitesten in die Spannzange (125') eingedrungenen Gewindegang des Spannbolzens (124') hin oder darüber hinaus erstrecken, deren Nutgrund (144) in der Spannstellung einen radialen Abstand von der gemeinsamen Achse (128) hat, der mindestens gleich oder größer als der Außenhalbmesser des Bolzengewindes (126') am Spannbolzen (124') ist, die am Umfang gleichmäßig verteilt angeordnet sind und die eine Umfangserstreckung haben, die mindestens gleich oder größer als die Umfangserstreckung der zwischen den Längsnuten (141) am Spannbolzen (124') stehen gebliebenen Kupplungsflächen (129') ist.

19. Werkzeug nach Anspruch 15,
g e k e n n z e i c h n e t durch das Merkmal:
4.2.2.3.1.1. An der Spannzange (38) sind die äußeren zylindrischen Führungsflächen (63, 64) und die innen gelegenen Kupplungsflächen (57, 58) wenigstens zum Teil oder alle paarweise in je der gleichen Querschnittsebene angeordnet, wobei im erstgenannten Fall bevorzugt diejenige Kupplungsfläche (58), die mit der am Spannbolzen (37) dem Ende am nächsten gelegene Kupplungsfläche (52) zusammenwirkt, und die ihr zugeordnete zylindrische Führungsfläche (64) paarweise in der gleichen Querschnittsebene angeordnet sind.

20. Werkzeug nach einem der Ansprüche 15 bis 19,
g e k e n n z e i c h n e t durch das Merkmal:
4.2.1.2.11. Die Kupplungsfläche (51, 52) am Spannbolzen (37) hat einen Kegelstumpfwinkel, der zwischen $45^{\circ}$ und $90^{\circ}$, bevorzugt bei $60^{\circ}$, liegt.

21. Werkzeug nach einem der Ansprüche 17 oder 18, gekennzeichnet durch das Merkmal:

4.2.1.2.9.1. Das Bolzengewinde (126) ist nach Art eines Sägezahngewindes ausgebildet, bei dem die tragende Flanke (127) gegenüber der gemeinsamen Achse (128) einen Neigungswinkel hat, der zwischen 22,5° und 45°, bevorzugt bei 30°, liegt und bei dem die nichttragende Flanke mit der gemeinsamen Achse (128) einen Winkel von zumindest annähernd 90° einschließt.

22. Werkzeug nach einem der Ansprüche 16, 18, 20 oder 21, gekennzeichnet durch die Merkmale:

4.2.2.5. An der vom Werkzeugkopf (122) abgekehrten Stirnseite (152) der Spannzange (125') ist eine Feder (151) angeordnet, die sich in der vom Werkzeugkopf (122) abgekehrten Richtung an einem Teil (152) des Werkzeughalters (121) abstützt und die so ausgelegt ist, daß sie in der Spannstellung der Spannzange (125') auf diese eine Kraft in Richtung auf den Werkzeugkopf (122) hin ausübt,

4.2.2.5.1. die Feder (151) wird bevorzugt durch einen Satz Tellerfedern gebildet, die vorzugsweise auf der Zugstange (133) geführt sind,

4.2.2.6. an der Innenseite der Spannzange (125') ist in mindestens einer, bevorzugt in jeder, ihrer Längsnuten (143) oder in deren axialer Fluchtlinie ein Anschlag (154) vorhanden, der in der Bewegungsbahn des mit den Kupplungsflächen (127') versehenen Teils des Spannbolzens (125') in axialer Richtung an derjenigen Stelle angeordnet ist, an der die an die vorderste Kupplungsfläche (127') des Spannbolzens (125') anschließende stirnseitige Übergangsfläche (155') gerade

an dem Anschlag (154) anliegt, wenn die Kupplungsflächen (127') des Spannbolzens (125') und die Kupplungsflächen (129') der Spannzange (125') in Umfangsrichtung zumindest annähernd miteinander fluchten.

23. Werkzeug nach Anspruch 21, gekennzeichnet durch das Merkmal:

4.2.2.6.1. Der Anschlag wird durch eine Anschlagscheibe (157) oder ein Anschlagkreuz gebildet, an der bzw. dem die eigentlichen Anschläge als axial ausgerichtete Vorsprünge angeordnet sind, die bevorzugt als Gewindestifte (156) ausgebildet sind.

24. Werkzeug nach einem der Ansprüche 16 bis 18 oder 20 bis 21, gekennzeichnet durch die Merkmale:

4.2.2.3.5.1. Die Drehvorrichtung (165) weist ein Zahnrad (166) auf, das vorzugsweise auf der Zugstange (167) gelagert ist, und das mit der Spannzange (168) in tangentialer Richtung gekoppelt ist, vorzugsweise mittels eines oder mehrerer axial ausgerichteter Stifte (169), die in Ausnehmungen und/oder in die Schlitze der Spannzange (168) eingreifen,

4.2.2.3.5.2. die Drehvorrichtung weist eine Zahnstange (171) auf, die die gemeinsame Achse kreuzt, die mit dem Zahnrad (166) kämmt und die mit einem linearen Kraftantrieb (173 gekoppelt ist, oder

4.2.2.3.5.3. die Drehvorrichtung (175) weist ein zweites Zahnrad (176) auf, das mit dem ersten Zahnrad (166) kämmt, und das mit einem Drehantrieb (177) gekoppelt ist.

25. Werkzeug nach einem der Ansprüche 15 bis 24, g e k e n n z e i c h n e t durch die Merkmale:

4.2.1.4. Der Spannbolzen (37) weist an der Verbindungsstelle mit dem Werkzeugkopf (22) eine kegelstumpfförmige Führungs- und Anlagefläche (41) auf, die bevorzugt in einem gewissen Abstand vom Ende des Spannbolzens (37) angeordnet ist, und die bevorzugt an einem Bund (42) des Spannbolzens (37) angeordnet ist,

4.2.1.5. der Werkzeugkopf (22) weist an der Verbindungsstelle mit dem Spannbolzen (37) eine kegelstumpfförmige Führungs- und Anlagefläche (45) auf, die auf die zugeordnete Führungs- und Anlagefläche (41) am Spannbolzen (37) abgestimmt ist.

26. Werkzeug nach Anspruch 25, g e k e n n z e i c h n e t durch die Merkmale:

4.2.1.6. Der Spannbolzen (37) weist an dem dem Werkzeugkopf (22) zugekehrten Ende eine zylindrische Führungsfläche (44) auf,

4.2.1.7. der Werkzeugkopf (22) weist eine zylindrische Führungsfläche (47) auf, die auf die zylindrische Führungsfläche (44) am Ende des Spannbolzens (37) abgestimmt ist.

27. Werkzeug nach Anspruch 25 oder 26, g e k e n n z e i c h n e t durch die Merkmale:

4.2.1.8. Der Spannbolzen (37) weist an der Verbindungsstelle mit dem Werkzeugkopf (22) ein Schraubengewinde (43) auf, das bevorzugt als Sägezahngewinde ausgebildet ist, dessen annähernd rechtwinklig zur gemeinsamen Achse (32) ausgerichtete Gewindeflanke vom Werkzeugkopf (22) abgekehrt ist,

4.2.1.9. das Schraubengewinde (43) ist zwischen der kegelstumpfförmigen Anlage- und Führungsfläche (41) und dem Ende des Schraubenbolzens bzw., soweit vorhanden, der zylindrischen Führungsfläche (44) am Ende des Spannbolzens angeordnet,

4.2.1.10. der Werkzeugkopf (22) weist ein Muttergewinde (46) auf, das auf das Schraubengewinde (43) am Spannbolzen (37) abgestimmt ist.

Fig.1
20
21
28, 29
26,27
70
69
59
37
38
55
60
22
23
77
39
24
25
63
65
31
67
64
66
32
68

Fig.2
28
26
61
37
62
55
42
41
29
27
53
51
54
52
43
44
76
79
77
78
39
22
47
46
45
48
24
49
38
73
57
71
58
74
72
21

Fig. 3
27
26
29
28

Fig. 4
34
36
28
29
35
33
Fig. 5
29'
28'

Fig. 6
84
82
83
81
95
88
94
87
86
85
92
91
93
89
Fig. 7
81'
81'
95'
85
94
87
92
93
97
96
98

111
104
103
112
113
114
101
102
107
100
109
Fig. 8

100
101
106
104
108
103
105
111
102
107
109
Fig. 9

Fig. 10
120
121
122
124
126
131
132
152
135
136
133
151
153
128
125
123
130
134
Fig. 11
137
121
136
124
126, 130
125
137
137
Fig. 12
121
124'
125'
142
143
141
144
126', 130'
147
Fig. 13
125'
145
126'
124'
146
130'

Fig. 14

150
125
127
129
131
160
158
130
126
156
124
157
128
155
154

Fig. 15

124
137
160
136
158
136
137
156

Fig. 16

156
158
157
158
158
156
156

Fig. 17

172
165
171
167
168
166


Fig. 18

165
171
173
166
176
177
175

Europäisches Patentamt

**EUROPÄISCHER RECHERCHENBERICHT**

0132825
Nummer der Anmeldung

EP 84108698.6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | US - A - 4 196 506 (REED) * Spalte 9, Zeile 33 bis Spalte 10, Zeile 41; Fig. 16 * | 1,2,6 7 | B 23 B 29/03 |
| X | DE - B2 - 1 777 019 (KEARNY) * Spalte 6, Zeile 54 bis Spalte 7, Zeile 56; Fig. 4 * | 1,2,3 5,6,7 | |
| Y | DE - B2 - 2 150 558 (MOTTU) * Spalte 3, Zeile 49, bis Spalte 4, Zeile 9; Fig. 8 * | 1,2,6 7 | |
| | | | RECHERCHIERTE SACHGEBIETE (Int. Cl.4) |
| Y | DE - A - 1 652 673 (THE GLACIER) * Gesamt * | 1,2,6 7 | B 23 B 29/00 |
| A | US - A - 3 520 228 (WOHLFEIL) * Spalte 10 Zeilen 38 bis 55; Fig. 5 und 6 * | 16 | B 23 B 31/00<br>B 23 Q 3/00 |
| A | DE - B - 1 652 715 (RATIER-FOREST) * Gesamt * | 17 | |

Der vorliegende Recherchenbericht wurde für alle Patentansprüche erstellt.

| Recherchenort | Abschlußdatum der Recherche | Prüfer |
|---|---|---|
| WIEN | 16-10-1984 | LEBZELTERN |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82